(19) Europäisches Patentamt
European Patent Office
Office européen des brevets

(11) EP 4 682 201 A1

(12) EUROPEAN PATENT APPLICATION

(43) Date of publication:
21.01.2026 Bulletin 2026/04

(21) Application number: 24189158.9

(22) Date of filing: 17.07.2024

(51) International Patent Classification (IPC):
*C08L 23/12* (2006.01) *C08L 23/14* (2006.01)

(52) Cooperative Patent Classification (CPC):
(C-Sets available)
**C08L 23/12; C08L 23/142;** C08L 2205/025 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
- **WANG, Jingbo**
  **4021 Linz (AT)**
- **GAHLEITNER, Markus**
  **4021 Linz (AT)**

(74) Representative: **Maiwald GmbH**
**Elisenhof**
**Elisenstraße 3**
**80335 München (DE)**

# (54) BETA-NUCLEATED MULTIMODAL COPOLYMERS

(57) A polypropylene composition comprising a first propylene copolymer, a second propylene copolymer and a beta nucleating agent, wherein the two propylene copolymer fractions contain different comonomers.

EP 4 682 201 A1

(52) Cooperative Patent Classification (CPC): (Cont.)

C-Sets
**C08L 23/12, C08L 23/142, C08K 5/0083;**
**C08L 23/142, C08L 23/12, C08K 5/0083**

## Description

### Field of the Invention

The present invention is directed to a polypropylene composition comprising a first propylene copolymer, a second propylene copolymer and a beta nucleating agent, wherein the two propylene copolymer fractions contain different comonomers and an article comprising said polypropylene composition.

### Background to the Invention

When cooling from a melt, polypropylene typically crystallizes into the monoclinic α-crystalline form. In addition to this α-form, polypropylene may also crystallize in the hexagonal β-crystalline form and the orthorhombic γ-crystalline form. The metastable β-form is typically characterised by improved impact strength and crack growth retention, which is advantageous for a number of applications, such as in pipes and fittings, but also in profiles and ducts, automotive parts and other technical articles.

Typically, β-crystallisation is achieved through the addition of specific β-nucleating agents, such as quinacridone pigments (e.g. in EP 0 177 961 A2), amide compounds (e.g. NJstar NU-100, N,N'-dicyclohexyl-2,6-naphthalene dicarboxamide) and, more recently, heteronuclear rare earth complexes such as WBG (as originally disclosed in Xiao W. et al, J. Appl. Polym. Sci., 111, 1076-1085 (2009)).

It is also known that calcium salts of certain simply dibasic acids (such as pimelic acid and suberic acid, as in WO 2008/074494 A1) can perform well as β-nucleating agents, though these salts can be very sensitive to traces of water and other difficult to control parameters.

Whilst a number of β-nucleating agents are known in the art, they are somewhat unreliable when used in industrial processes.

When developing new β-nucleating agents, it is typical to test their effectiveness for nucleating propylene homopolymers, whereas far less attention is paid to the nucleation of propylene copolymers. As such, the β-nucleation of copolymers is much less understood.

It is thus desired to provide β-nucleated copolymer compositions that combine high amounts of beta phase with excellent impact properties.

### Summary of the Invention

The present invention is based on the observation that multimodal polypropylene compositions comprising fractions having different comonomers are far more suitable for beta nucleation than simple unimodal propylene copolymers.

In a first aspect, the present invention is directed to a polypropylene composition (PC) comprising:

a) from 30 to 70 wt.-%, relative to the total weight of the polypropylene composition (PC), of a first propylene copolymer (PP1) comprising propylene monomers and a first comonomer selected from the group consisting of ethylene and $C_{4-8}$ alpha olefins;
b) from 30 to 70 wt.-%, relative to the total weight of the polypropylene composition (PC), of a second propylene copolymer (PP2) comprising propylene monomers and a second comonomer selected from the group consisting of ethylene and $C_{4-8}$ alpha olefins; and
c) from 0.1 to 5000 ppm, relative to the total weight of the polypropylene composition (PC), of a beta nucleating agent (NU);

wherein the second comonomer is different to the first comonomer, the first propylene copolymer (PP1) is free from the second comonomer, and the second propylene copolymer (PP2) is free from the first comonomer,
wherein the combined amounts of the first propylene copolymer (PP1), the second propylene copolymer (PP2), and the beta nucleating agent (NU) add up to at least 90 wt.-%, relative to the total weight of the polypropylene composition (PC), and
the polypropylene composition (PC) has a melt flow rate ($MFR_2$), determined according to ISO 1133 at 230 °C at a load of 2.16 kg, in the range from 0.10 to 4.00 g/10 min.

In a second aspect, the present invention is directed to an article comprising at least 90 wt.-%, relative to the total weight of the article, of the polypropylene composition (PC) of the first aspect.

## Definitions

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.

Unless clearly indicated otherwise, use of the terms "a," "an," and the like refers to one or more.

All references to standardised measurement methods, such as ISO standards, used throughout the present specification are to be interpreted as preferably referring to the specific version (i.e. publication date) of said standardised measurement method in the determination methods section (e.g. ISO 1133 (2022)).

According to the present invention, the expression "propylene homopolymer" relates to a polypropylene that consists substantially, i.e. of at least 99.5 mol-%, more preferably of at least 99.8 mol-%, like of at least 99.9 mol-%, of propylene units. In another embodiment, only propylene units are detectable, i.e. only propylene has been polymerized.

A propylene random copolymer is a copolymer of propylene monomer units and comonomer units, preferably selected from ethylene and $C_4$-$C_{12}$ alpha-olefins, in which the comonomer units are distributed randomly over the polymeric chain. The propylene random copolymer can comprise comonomer units from one or more comonomers different in their amounts of carbon atoms. In the following amounts are given in mol-% unless it is stated otherwise. A propylene random copolymer must contain at least 50 mol-% propylene units.

Typical for propylene homopolymers and propylene random copolymers is the presence of only one glass transition temperature.

## Detailed Description

In a first aspect, the present invention is directed to a polypropylene composition (PC) comprising, more preferably consists of:

a) from 30 to 70 wt.-%, more preferably in the range from 40 to 60 wt.-%, most preferably in the range from 45 to 55 wt.-%, relative to the total weight of the polypropylene composition (PC), of a first propylene copolymer (PP1);
b) from 30 to 70 wt.-%, more preferably in the range from 40 to 60 wt.-%, most preferably in the range from 45 to 55 wt.-%, relative to the total weight of the polypropylene composition (PC), of a second propylene copolymer (PP2); and
c) from 0.1 to 5000 ppm, more preferably from 1 to 1000 ppm, most preferably from 10 to 500 ppm, relative to the total weight of the polypropylene composition (PC), of a beta nucleating agent (NU).

In one embodiment, the polypropylene composition (PC) comprises, more preferably consists of:

a) from 30 to 70 wt.-%, relative to the total weight of the polypropylene composition (PC), of the first propylene copolymer (PP1);
b) from 30 to 70 wt.-%, relative to the total weight of the polypropylene composition (PC), of the second propylene copolymer (PP2); and
c) from 0.1 to 5000 ppm, relative to the total weight of the polypropylene composition (PC), of the beta nucleating agent (NU).

In a further embodiment, the polypropylene composition (PC) comprises, more preferably consists of:

a) from 40 to 60 wt.-%, relative to the total weight of the polypropylene composition (PC), of the first propylene copolymer (PP1);
b) from 40 to 60 wt.-%, relative to the total weight of the polypropylene composition (PC), of the second propylene copolymer (PP2); and
c) from 1 to 1000 ppm, relative to the total weight of the polypropylene composition (PC), of the beta nucleating agent (NU).

In yet a further embodiment, the polypropylene composition (PC) comprises, more preferably consists of:

a) from 45 to 55 wt.-%, relative to the total weight of the polypropylene composition (PC), of the first propylene copolymer (PP1);
b) from 45 to 55 wt.-%, relative to the total weight of the polypropylene composition (PC), of the second propylene copolymer (PP2); and

c) from 10 to 500 ppm, relative to the total weight of the polypropylene composition (PC), of the beta nucleating agent (NU).

In all embodiments, the combined amounts of the first propylene copolymer (PP1), the second propylene copolymer (PP2), and the beta nucleating agent (NU) add up to at least 90 wt.-%, more preferably at least 95 wt.-%, most preferably at least 98 wt.-%, relative to the total weight of the polypropylene composition (PC).
The individual components will now be described in more detail.

**The first propylene copolymer (PP1)**

One essential component of the polypropylene composition (PC) is the first propylene copolymer (PP1).
The first propylene copolymer (PP1) comprises, more preferably consists of, propylene monomers and a first comonomer selected from the group consisting of ethylene and $C_{4-8}$ alpha olefins.
The first comonomer is different to the second comonomer.
The first propylene copolymer (PP1) is free from the second comonomer.
The first comonomer is preferably ethylene.
It is particularly preferred that the first propylene copolymer (PP1) consists of propylene monomers and ethylene comonomers, i.e. the first propylene copolymer (PP1) is a propylene-ethylene copolymer.
The first propylene copolymer (PP1) preferably has a melt flow rate ($MFR_2$), determined according to ISO 1133 at 230 °C at a load of 2.16 kg, in the range from 0.05 to 5.00 g/10 min, more preferably in the range from 0.08 to 1.00 g/10 min, most preferably in the range from 0.10 to 0.30 g/10 min.
The first propylene copolymer (PP1) preferably has a comonomer content, more preferably an ethylene content (C2), determined by quantitative $^{13}C$-NMR spectroscopy, in the range from 3.0 to 9.0 mol-%, more preferably in the range from 4.0 to 8.0 mol-%, most preferably in the range from 5.0 to 7.0 mol-%, relative to the total number of monomer+comonomer units of the first propylene copolymer (PP1).
The first propylene copolymer (PP1) preferably has a propylene content (C3), determined by quantitative $^{13}C$-NMR spectroscopy, in the range from 91.0 to 97.0 mol-%, more preferably in the range from 92.0 to 96.0 mol-%, most preferably in the range from 93.0 to 95.0 mol-%, relative to the total number of monomer+comonomer units of the first propylene copolymer (PP1).
The first propylene copolymer (PP1) preferably has a xylene cold soluble (XCS) content, determined according to ISO 16152, in the range from 2.0 to 7.0 wt.-%, more preferably in the range from 3.0 to 6.0 wt.-%, most preferably in the range from 4.0 to 5.0 wt.-%, relative to the total weight of the first propylene copolymer (PP1).
The first propylene copolymer (PP1) preferably has a melting temperature ($T_m$), determined according to ISO 11357, in the range from 110.0 to 130.0 °C, more preferably in the range from 115.0 to 125.0 °C, most preferably in the range from 118.0 to 123.0 °C.
The first propylene copolymer (PP1) preferably has a content of 2,1-regiodefects, as determined by $^{13}C$-NMR spectroscopy, in the range from 0.05 to 1.40 mol-%, more preferably in the range from 0.10 to 1.00 mol-%, yet more preferably in the range from 0.20 to 0.70 mol-%.
The presence of 2,1-regiodefects is an indication that the first propylene copolymer (PP1) has been polymerized in the presence of a metallocene catalyst.
Therefore, it is further preferred that the first propylene copolymer (PP1) has been polymerized in the presence of a metallocene catalyst.
The first propylene copolymer (PP1) is present in an amount in the range from 30 to 70 wt.-%, more preferably in the range from 40 to 60 wt.-%, most preferably in the range from 45 to 55 wt.-%, relative to the total weight of the polypropylene composition (PC).

**The second propylene copolymer (PP2)**

Another essential component of the polypropylene composition (PC) is the second propylene copolymer (PP2).
The second propylene copolymer (PP2) comprises, more preferably consists of, propylene monomers and a second comonomer selected from the group consisting of ethylene and $C_{4-8}$ alpha olefins.
The second comonomer is different to the first comonomer.
The second propylene copolymer (PP2) is free from the first comonomer. It is preferred that the second propylene copolymer (PP2) does not comprise ethylene.
The second comonomer is preferably selected from the group consisting of $C_{4-8}$ alpha olefins, more preferably from the group consisting of $C_{4-6}$ alpha olefins, yet more preferably from the group consisting of 1-butene and 1-hexene, most preferably the second comonomer is 1-hexene.
It is particularly preferred that the second propylene copolymer (PP2) consists of propylene monomers and 1-hexene comonomers, i.e. the second propylene copolymer (PP2) is a propylene-1-hexene copolymer.

The second propylene copolymer (PP2) preferably has a melt flow rate ($MFR_2$), determined according to ISO 1133 at 230 °C at a load of 2.16 kg, in the range from 0.05 to 5.00 g/10 min, more preferably in the range from 0.30 to 1.50 g/10 min, most preferably in the range from 0.50 to 1.00 g/10 min. It is especially preferred that the melt flow rate ($MFR_2$) of the second propylene copolymer (PP2) is higher than the melt flow rate ($MFR_2$) of the first propylene copolymer (PP1).

The second propylene copolymer (PP2) preferably has a comonomer content, more preferably a 1-hexene content (C6), determined by quantitative $^{13}$C-NMR spectroscopy, in the range from 0.5 to 3.0 mol-%, more preferably in the range from 0.8 to 2.5 mol-%, most preferably in the range from 1.0 to 2.0 mol-%, relative to the total number of monomer+comonomer units of the second propylene copolymer (PP2).

The second propylene copolymer (PP2) preferably has a propylene content (C3), determined by quantitative $^{13}$C-NMR spectroscopy, in the range from 97.0 to 99.5 mol-%, more preferably in the range from 97.5 to 99.2 mol-%, most preferably in the range from 98.0 to 99.0 mol-%, relative to the total number of monomer+comonomer units of the second propylene copolymer (PP2).

The second propylene copolymer (PP2) preferably has a xylene cold soluble (XCS) content, determined according to ISO 16152, in the range from 0.0 to 2.0 wt.-%, more preferably in the range from 0.0 to 1.0 wt.-%, most preferably in the range from 0.0 to 0.5 wt.-%, relative to the total weight of the second propylene copolymer (PP2).

The second propylene copolymer (PP2) preferably has a melting temperature ($T_m$), determined according to ISO 11357, in the range from 125.0 to 150.0 °C, more preferably in the range from 130.0 to 145.0 °C, most preferably in the range from 135.0 to 140.0 °C.

The second propylene copolymer (PP2) preferably has a content of 2,1-regiodefects, as determined by $^{13}$C-NMR spectroscopy, in the range from 0.05 to 1.40 mol-%, more preferably in the range from 0.10 to 1.00 mol-%, yet more preferably in the range from 0.20 to 0.70 mol-%.

The presence of 2,1-regiodefects is an indication that the second propylene copolymer (PP2) has been polymerized in the presence of a metallocene catalyst.

Therefore, it is further preferred that the second propylene copolymer (PP2) has been polymerized in the presence of a metallocene catalyst.

The second propylene copolymer (PP2) is present in an amount in the range from 30 to 70 wt.-%, more preferably in the range from 40 to 60 wt.-%, most preferably in the range from 45 to 55 wt.-%, relative to the total weight of the polypropylene composition (PC).

**The beta nucleating agent (NU)**

The final essential component of the polypropylene composition (PC) is the beta nucleating agent (NU).

In the broadest sense, the beta nucleating agent may be any suitable beta nucleating agent known to the person skilled in the art. This may be a single beta nucleating agent or a combination of beta nucleating agents, which may be used in combination with various well-known synergists.

It is particularly preferred that the beta nucleating agent is an organic beta nucleating agent, more preferably a carboxylate-free organic beta nucleating agent, yet more preferably a quinacridone derivative, most preferably is Quino [2,3-b]acridine-6,7,13,14(5H,12H)-tetrone. Quino[2,3-b]acridine-6,7,13,14(5H,12H)-tetrone has the CAS No: 1503-48-6.

Other suitable quinacridone derivatives include 5,12-dihydroquinolino[2,3-b]acridine-7,14-dione (i.e. quinacridone, CAS No: 1047-16-1) and 5,6,12,13-Tetrahydroquinolino[2,3-b]acridine-7,14-dione (CAS No: 5862-38-4). Suitable commercially available beta nucleating agents containing these quinacridone derivatives include Cinquasia Gold YT-923-D and CGNA-7588, which are both available from BASF SE.

The beta nucleating agent is present in an amount in the range from 0.1 to 5000 ppm, more preferably from 1 to 1000 ppm, most preferably from 10 to 500 ppm, relative to the total weight of the polypropylene composition (PC).

**The polypropylene composition (PC)**

As explained above, the second comonomer is different to the first comonomer, the first propylene copolymer (PP1) is free from the second comonomer, and the second propylene copolymer (PP2) is free from the first comonomer. As such, the polypropylene composition (PC) is bimodal in comonomer identity.

The polypropylene composition (PC) has a melt flow rate ($MFR_2$), determined according to ISO 1133 at 230 °C at a load of 2.16 kg, in the range from 0.10 to 4.00 g/10 min, more preferably in the range from 0.15 to 1.00 g/10 min, most preferably in the range from 0.20 to 0.50 g/10 min.

The polypropylene composition (PC) preferably has a total comonomer content, as determined by quantitative $^{13}$C-NMR spectroscopy, in the range from 1.8 to 6.0 mol-%, more preferably in the range from 2.5 to 5.0 mol-%, most preferably in the range from 3.0 to 4.5 mol-%, relative to the total number of monomer+comonomer units of the polypropylene composition (PC).

The polypropylene composition (PC) preferably has an ethylene content (C2), as determined by quantitative $^{13}C$-NMR spectroscopy, in the range from 1.5 to 4.5 mol-%, more preferably in the range from 2.0 to 4.0 mol-%, most preferably in the range from 2.5 to 3.5 mol-%, relative to the total number of monomer+comonomer units of the polypropylene composition (PC).

The polypropylene composition (PC) preferably has a content of comonomers selected from the group consisting of $C_{4-8}$ alpha olefins, more preferably a 1-hexene content (C6), as determined by quantitative $^{13}C$-NMR spectroscopy, in the range from 0.3 to 1.5 mol-%, more preferably in the range from 0.4 to 1.2 mol-%, most preferably in the range from 0.5 to 1.0 mol-%, relative to the total number of monomer+comonomer units of the polypropylene composition (PC).

The polypropylene composition (PC) preferably has a propylene content (C3), as determined by quantitative $^{13}C$-NMR spectroscopy, in the range from 94.0 to 98.2 mol-%, more preferably in the range from 95.0 to 97.5 mol-%, most preferably in the range from 95.5 to 97.0 mol-%, relative to the total number of monomer+comonomer units of the polypropylene composition (PC).

It is preferred that the polypropylene composition (PC) has a crystallisation temperature ($T_c$), determined according to ISO 11357, in the range from 90 to 120 °C, more preferably in the range from 95 to 115 °C, most preferably in the range from 100 to 110 °C.

It is preferred that the polypropylene composition (PC) has a melting temperature ($T_m$), determined according to ISO 11357, in the range from 125 to 150 °C, more preferably in the range from 128 to 145 °C, most preferably in the range from 131 to 140 °C.

It is preferred that the polypropylene composition (PC) has a flexural modulus, determined according to ISO 178 on $80 \times 10 \times 4$ mm$^3$ injection-moulded specimens prepared according to ISO 19069-2, in the range from 750 to 1500 MPa, more preferably in the range from 780 to 1200 MPa, most preferably in the range from 800 to 1000 MPa.

It is preferred that the polypropylene composition (PC) has a Charpy Notched Impact Strength (NIS) at 23 °C, measured according to ISO 179-1 eA on $80 \times 10 \times 4$ mm$^3$ injection-moulded specimens prepared according to ISO 19069-2, in the range from 30 to 100 kJ/m$^2$, more preferably in the range from 35 to 80 kJ/m$^2$, most preferably in the range from 40 to 60 kJ/m$^2$.

It is preferred that the polypropylene composition (PC) has a Charpy Notched Impact Strength (NIS) at 0 °C, measured according to ISO 179-1 eA on $80 \times 10 \times 4$ mm$^3$ injection-moulded specimens prepared according to ISO 19069-2, in the range from 2.0 to 10.0 kJ/m$^2$, more preferably in the range from 2.5 to 8.0 kJ/m$^2$, most preferably in the range from 3.0 to 6.0 kJ/m$^2$.

It is preferred that the polypropylene composition (PC) has a beta phase content ($K_\beta$), determined by wide angle x-ray scattering (WAXS) on a specimen as defined in the determination methods, in the range from 60 to 99%, more preferably in the range from 63 to 95%, most preferably in the range from 65 to 90%

It is preferred that the polypropylene composition (PC) has a crystallinity index Xc, determined by wide angle x-ray scattering (WAXS) on a specimen as defined in the determination methods in the range from 50 to 70%, more preferably in the range from 52 to 65%, most preferably in the range from 54 to 60%.

### The article

In a final aspect, the present invention is directed to an article comprising at least 90 wt.-%, relative to the total weight of the article, of the polypropylene composition (PC) of the first aspect.

Preferably the article comprises at least 95 wt.-%, more preferably at least 98 wt.-%, relative to the total weight of the article, of the polypropylene composition (PC) of the first aspect.

In one embodiment, the article consists of the polypropylene composition (PC) of the first aspect.

The article is an extruded or a moulded article. It is particularly preferred that the article is a pipe.

## EXAMPLES

### 1. Measurement methods

The following definitions of terms and determination methods apply for the above general description of the invention including the claims as well as to the below examples unless otherwise defined.

### Quantification of microstructure by NMR spectroscopy

Propylene-ethylene copolymer

Quantitative nuclear-magnetic resonance (NMR) spectroscopy was used to quantify the isotacticity and regio-regularity of the ethylene-propylene copolymer.

Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probe head at 125°C using nitrogen gas for all pneumatics.

Approximately 200 mg of material was dissolved in *1,2*-tetrachloroethane-$d_2$ (TCE-$d_2$). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ 16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Sevem, J., Talarico, G., Macromol. Rapid Commun. 2007, 28, 11289). A total of 8192 (8k) transients were acquired per spectra.

Quantitative $^{13}C\{^1H\}$ NMR spectra were processed, integrated and relevant quantitative properties determined from the integrals using proprietary computer programs.

All chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromolecules 30 (1997) 6251).

Specifically the influence of regio-defects and comonomer on the quantification of the tacticity distribution was corrected for by subtraction of representative regio-defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\,\% = 100 * (mmmm / \text{sum of all pentads})$$

The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., Cavallo, L., Fait, A., Piemontesi, F., Chem. Rev. 2000, 100, 1253).

The amount of 2,1 erythro regio-defects was quantified using the average integral of the two characteristic methyl sites at 17.7 and 17.2 ppm:

$$P_{21e} = (I_{e6} + I_{e8}) / 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio-defects:

$$P_{total} = P_{12} + P_{21e}$$

The mole percent of 2,1 erythro regio-defects was quantified with respect to all propene:

$$[21e]\ \text{mol-}\% = 100 * (P_{21e} / P_{total})$$

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S_{\beta\beta} + S_{\beta\gamma} + S_{\beta\delta} + 0.5(S_{\alpha\beta} + S_{\alpha\gamma}))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [\text{mol-\%}] = 100 * f_E$$

The weight percent comonomer incorporation was calculated from the mole fraction:

$$E\ [\text{wt.-\%}] = 100 * (f_E * 28.06) / ((f_E * 28.06) + ((1-f_E) * 42.08))$$

<u>Propylene-hexene copolymer</u>

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilising the NOE at short recycle delays of 3 s {pollard04, klimke06} and the RS-HEPT decoupling scheme {fillip05, griffin07}. A total of 16384 (16k) transients were acquired per spectra.

Quantitative $^{13}C\{^1H\}$ NMR spectra were processed, integrated and relevant quantitative properties determined from the integrals. All chemical shifts are internally referenced to the methyl isotactic pentad (*mmmm*) at 21.85 ppm.

Characteristic signals indicative of regio defects were observed {resconi00}.

The presence of 2,1-erythro regio defects was indicated by the presence of the $P\alpha\beta$ and $P\alpha\gamma$ methyl sites at 17.7 and 17.2 ppm and confirmed by other characteristic signals.

The amount of 2,1-erythro regio defects was quantified using the average integral of the $P\alpha\beta$ and $P\alpha\gamma$ sites at 17.7 and 17.2 ppm:

$$P_{21e} = 0.5 * (I_{P\alpha\beta} + I_{P\alpha\gamma})$$

With no other regio defects being observed {resconi00} the total amount of secondary (2,1) inserted propene was quantified as follows:

$$P_{21} = P_{21e}$$

The total amount of primary (1,2) inserted propene was quantified based on the propene methyl sites between 22.7 and 19.7 ppm with correction for any included sites not related to primary insertion:

$$P_{12} = I_{CH3} + P_{21e}$$

The total amount of propene was quantified as the sum of primary (1,2) inserted propene and all regio defects:

$$Ptotal = P_{12} + P_{21}$$

The mole percent of 2,1-erythro regio defects was quantified with respect to all propene:

$$[21e]\ mol\% = 100 * (P_{21e} / P_{total})$$

The amount isolated 1-hexene incorporated in PPHPP sequences was quantified using the integral of the αB4 sites at 44.2 ppm accounting for the number of reporting sites per comonomer and the presence of consecutively incorporated 1-hexene in PPHHPP sequences:

$$H = I\alpha B4 / 2$$

The total 1-hexene content was calculated based on the sum of isolated incorporated 1-hexene:

$$Htotal = H$$

The comonomer fraction calculated as the fraction of 1-hexene in the polymer with respect to all monomer in the polymer:

$$fHtotal = Htotal / (Ptotal + Htotal)$$

$$fPtotal = Ptotal / (Ptotal + Htotal)$$

The weight percent comonomer incorporation is calculated from the mole fractions:

$$H\ [wt\%] = 100 * ( fHtotal * 84.16 ) / ((fHtotal * 84.16) + (fPtotal) * 42.08))$$

klimke06 - Klimke, K., Parkinson, M., Piel, C., Kaminsky, W., Spiess, H.W., Wilhelm, M., Macromol. Chem. Phys. 2006;207:382.
parkinson07 - Parkinson, M., Klimke, K., Spiess, H.W., Wilhelm, M., Macromol. Chem. Phys. 2007;208:2128.
pollard04 - Pollard, M., Klimke, K., Graf, R., Spiess, H.W., Wilhelm, M., Sperber, O., Piel, C., Kaminsky, W., Macromolecules 2004;37:813.
filip05 - Filip, X., Tripon, C., Filip, C., J. Mag. Resn. 2005, 176, 239
griffin07 - Griffin, J.M., Tripon, C., Samoson, A., Filip, C., and Brown, S.P., Mag. Res. in Chem. 2007 45, S1, S198
castignolles09 - Castignolles, P., Graf, R., Parkinson, M., Wilhelm, M., Gaborieau, M., Polymer 50 (2009) 2373
resconi00 - Resconi, L., Cavallo, L., Fait, A., Piemontesi, F., Chem. Rev. 2000, 100, 1253

**Melt Flow Rate**

The melt flow rate (MFR) was determined according to ISO 1133 (2022) and is indicated in g/10 min. The MFR is an indication of the flowability, and hence the processability, of the polymer. The higher the melt flow rate, the lower the viscosity of the polymer. The $MFR_2$ of polypropylene was determined at a temperature of 230 °C and a load of 2.16 kg.

**The xylene soluble fraction at room temperature (XCS, wt.-%):** The amount of the polymer soluble in xylene was determined at 25 °C according to ISO 16152 (2022).

**DSC analysis, melting temperature ($T_m$) and crystallization temperature ($T_c$):** measured with a TA Instrument Q200 differential scanning calorimetry (DSC) on 5 to 7 mg samples. DSC is run according to ISO 11357 (2023) / part 3 /method C2 in a heat / cool / heat cycle with a scan rate of 10 °C/min in the temperature range of -30 to +225 °C. Crystallization temperature ($T_c$) and crystallization enthalpy ($H_e$) are determined from the cooling step, while melting temperature ($T_m$) and melting enthalpy ($H_m$) are determined from the second heating step.

**The Flexural Modulus** was determined according to ISO 178 (2019) method A (3-point bending test) on 80 × 10 × 4 $mm^3$ specimens. Following the standard, a test speed of 2 mm/min and a span length of 16 times the thickness was used. The testing temperature was 23±2° C. Injection moulding was carried out according to ISO 19069-2 (2016) using a melt temperature of 255°C for all materials irrespective of material melt flow rate.

**Notched impact strength (NIS)**

The Charpy notched impact strength (NIS) was measured according to ISO 179 1eA (2023) at +23°C, using

injection moulded bar test specimens of 80 × 10 × 4 $mm^3$ specimens. Injection moulding was carried out according to ISO 19069-2 (2016) using a melt temperature of 255°C for all materials irrespective of material melt flow rate.

**Wide angle X-ray Scattering measurement (WAXS)**

The measurement of wide-angle X-ray scattering (WAXS) of the samples was conducted by a Bruker D8 Discover apparatus. The diffractometer was equipped with an X-ray tube with a copper target operating at 30 kV and 20mA and a GADDS 2-D detector. A point collimation (0.5 mm) was used to direct the beam onto the surface. The measurement was done in reflection geometry, and 28 angle in the range from 10° to 32.5° were measured. Data were collected for 300 s. Intensity vs. 2-theta curve was acquired with the same measurement parameters on an amorphous polypropylene sample, which was prepared by solvent extraction. An amorphous halo was obtained by smoothing the curve. The amorphous halo has been subtracted from the measured intensity vs. 2-theta curve to result in the crystalline curve.

The crystallinity index Xc can be defined by the area under the crystalline curve and the original spectrum using Challa, Hermans and Weidinger method [Challa F, Hermans PH, Weidinger A, Makromol. Chem. 56, 169 (1962)] as:

$$Xc = \frac{area\ under\ crystalline\ curve}{area\ under\ original\ spectrum} \times 100\%$$

The amount of β-form of the polypropylene within the crystalline phase $K_\beta$ was calculated using the Jones method [Turner-Jones A, Aizlewood JM, Beckett DR, Makromol. Chem. 75, 134 (1974)] according to the following equation (modified to be expressed as a percentage):

$$K_\beta = \frac{I^\beta(300)}{I^\alpha(110) + I^\alpha(040) + I^\alpha(130) + I^\beta(300)} \times 100\%$$

where, $I^\beta(300)$ is the intensity of β(300) peak, $I^\alpha$ (110) is the intensity of α(110) peak, $I^\alpha$ (040) is the intensity of α(040) peak and $I^\alpha$ (130) is the intensity of α(130) peak obtained after subtracting the amorphous halo.

The amount of γ-form of isotactic polypropylene (iPP) within the crystalline phase $K_\gamma$ was calculated using the method developed by Pae [Pae KD, J. Polym. Sci. , Part A, 6, 657 (1968)] (modified to be expressed as a percentage) as:

$$K_\gamma = \frac{I^\gamma(117)}{I^\alpha(130) + I^\gamma(117)} \times 100\%$$

where, $I^\alpha$ (130) is the intensity of α(130) peak and $I^\gamma$ (117) is the intensity of y(117) peak obtained after subtracting a base line joining the base of these peaks.

Measurements were performed on samples prepared in TA Instrument Q200 differential scanning calorimetry (DSC) machine. 5-7 mg of sample were sealed in an Al pan and heated to 225°C with a heating rate of 10°C/min, hold for 5min to erase the thermal history, and then it is cool down to 25°C with 10°C/min. The resultant sample is then used for WAXS measurement.

**Al, Zr and Hf determination (ICP-method)**

The elementary analysis of a catalyst was performed by taking a solid sample of mass, M, cooling over dry ice. Samples were diluted up to a known volume, V, by dissolving in nitric acid ($HNO_3$, 65 %, 5 % of V) and freshly deionised (DI) water (5 % of V). The solution was then added to hydrofluoric acid (HF, 40 %, 3 % of V), diluted with DI water up to the final volume, V, and left to stabilise for two hours.

The analysis was run at room temperature using a Thermo Elemental iCAP 6300 Inductively Coupled Plasma - Optical Emission Spectrometer (ICP-OES) which was calibrated using a blank (a solution of 5 % $HNO_3$, 3 % HF in DI water), and 6 standards of 0.5 ppm, 1 ppm, 10 ppm, 50 ppm, 100 ppm and 300 ppm of Al, with 0.5 ppm, 1 ppm, 5 ppm, 20 ppm, 50 ppm and 100 ppm of Hf and Zr in solutions of 5 % $HNO_3$, 3 % HF in DI water.

Immediately before analysis the calibration is 'resloped' using the blank and 100 ppm Al, 50 ppm Hf, Zr standard, a quality control sample (20 ppm Al, 5 ppm Hf, Zr in a solution of 5 % HNO3, 3 % HF in DI water) is run to confirm the reslope. The QC sample is also run after every 5th sample and at the end of a scheduled analysis set.

The content of hafnium was monitored using the 282.022 nm and 339.980 nm lines and the content for zirconium using 339.198 nm line. The content of aluminium was monitored via the 167.079 nm line, when Al concentration in ICP

sample was between 0-10 ppm (calibrated only to 100 ppm) and via the 396.152 nm line for Al concentrations above 10 ppm.

The reported values are an average of three successive aliquots taken from the same sample and are related back to the original catalyst by inputting the original mass of sample and the dilution volume into the software.

In the case of analysing the elemental composition of off-line prepolymerised catalysts, the polymeric portion is digested by ashing in such a way that the elements can be freely dissolved by the acids. The total content is calculated to correspond to the weight-% for the prepolymerised catalyst. In the examples as disclosed below no off-line prepolymerisation step was used.

**B. Experimental**

**1. Catalyst Preparation**

Reagents

2,6-Dimethylaniline (Acros), 1-bromo-3,5-dimethylbenzene (Acros), 1-bromo-3,5-di-tert-butylbenzene (Acros), bis(2,6-diisopropylphenyl)imidazolium chloride (Aldrich), triphenylphosphine (Acros), $NiCl_2$(DME) (Aldrich), dichlorodimethylsilane (Merck), $ZrCl_4$ (Merck), HfCl4, <1% Zr (Strem Chemicals), trimethylborate (Acros), $Pd(OAc)_2$ (Aldrich), $NaBH_4$ (Acros), 2.5 M nBuLi in hexanes (Chemetal), CuCN (Merck), magnesium turnings (Acros), silica gel 60, 40-63 $\mu$m (Merck), bromine (Merck), 96% sulfuric acid (Reachim), sodium nitrite (Merck), copper powder (Alfa), potassium hydroxide (Merck), $K_2CO_3$ (Merck), 12 M HCl (Reachim), TsOH (Aldrich), $MgSO_4$ (Merck), $Na_2CO_3$ (Merck), $Na_2SO_4$ (Akzo Nobel), methanol (Merck), diethyl ether (Merck), 1,2-dimethoxyethane (DME, Aldrich), 95% ethanol (Merck), dichloromethane (Merck), hexane (Merck), THF (Merck), and toluene (Merck) were used as received. Hexane, toluene and dichloromethane for organometallic synthesis were dried over molecular sieves 4A (Merck). Diethyl ether, THF, and 1,2-dimethoxyethane for organometallic synthesis were distilled over sodium benzophenoneketyl. $CDCl_3$ (Deutero GmbH) and $CD_2Cl_2$ (Deutero GmbH) were dried over molecular sieves 4A. 4-Bromo-6-*tert*-butyl-5-methoxy-2-methylindan-1-one was obtained as described in WO2013/007650.

**Synthesis of MC1 for Cat. 1**

**4-Bromo-2,6-dimethylaniline**

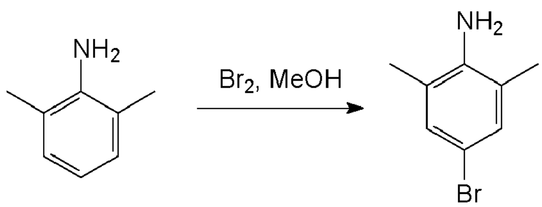


159.8 g (1.0 mol) of bromine was slowly (over 2 h) added to a stirred solution of 121.2 g (1.0 mol) of 2,6-dimethylaniline in 500 ml of methanol. The resulting dark-red solution was stirred overnight at room temperature, then poured into a cold solution of 140 g (2.5 mol) of potassium hydroxide in 1100 ml of water. The organic layer was separated, and the aqueous one was extracted with 500 ml of diethyl ether. The combined organic extract was washed with 1000 ml of water, dried over $K_2CO_3$, and evaporated in vacuum to give 202.1 g of 4-bromo-2,6-dimethylaniline (purity ca. 90%) as dark-red oil which crystallized upon standing at room temperature. This material was further used without additional purification.

$^1$H NMR ($CDCl_3$): $\delta$ 7.04 (s, 2H), 3.53 (br.s, 2H), 2.13 (s, 6H).

**1-Bromo-3,5-dimethylbenzene**

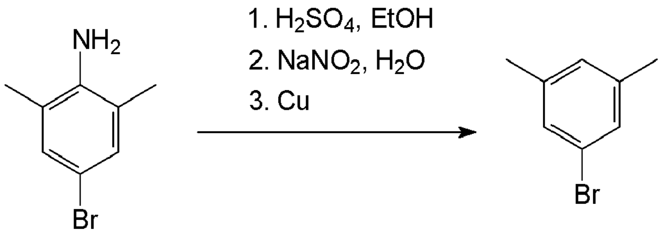


97 ml (1.82 mol) of 96% sulfuric acid was added dropwise to a solution of 134.7 g (ca. 673 mmol) of 4-bromo-2,6-dimethylaniline (prepared above, purity ca. 90%) in 1400 ml of 95% ethanol cooled to -10°C, at a such a rate to maintain the reaction temperature below 7°C. After the addition was complete, the solution was stirred at room temperature for 1 h. Then, the reaction mixture was cooled in an ice-bath, and a solution of 72.5 g (1.05 mol) of sodium nitrite in 150 ml of water was added dropwise over ca. 1 h. The formed solution was stirred at the same temperature for 30 min. Then the cooling bath was removed, and 18 g of copper powder was added. Upon completion of the rapid evolution of nitrogen additional portions (ca. 5 g each, ca.50 g in total) of copper powder were added with 10 min intervals until gas evolution ceased completely. The reaction mixture was stirred at room temperature overnight, then filtered through a glass frit (G3), diluted with two-fold volume of water, and the crude product was extracted with 4x150 ml of dichloromethane. The combined extract was dried over $K_2CO_3$, evaporated to dryness, and then distilled in vacuum (b.p. 60-63°C/5 mm Hg) to give a yellowish liquid. This product was additionally purified by flash-chromatography on silica gel 60 (40-63 μm; eluent: hexane) and distilled once again (b.p. 51-52°C/3 mm Hg) to give 63.5 g (51%) of 1-bromo-3,5-dimethylbenzene as a colorless liquid.

$^1$HNMR ($CDCl_3$): $\delta$ 7.12 (s, 2H), 6.89 (s, 1H), 2.27 (s, 6H). $^{13}C\{^1H\}$ NMR ($CDCl_3$): $\delta$ 139.81, 129.03, 128.61, 122.04, 20.99.

**(3,5-Dimethylphenyl)boronic acid**

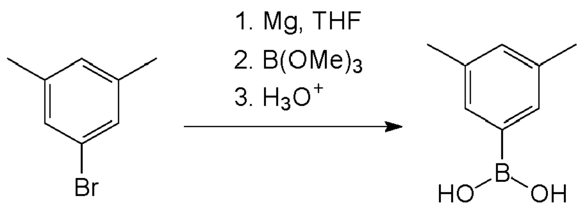


A solution of 3,5-dimethylphenylmagnesium bromide obtained from a solution of 190.3 g (1.03 mol) of 1-bromo-3,5-dimethylbenzene in 1000 ml of THF and 32 g (1.32 mol, 28% excess) of magnesium turnings was cooled to -78°C, and 104 g (1.0 mol) of trimethylborate was added in one portion. The resulting heterogeneous mixture was stirred overnight at room temperature. The boronic ester was hydrolyzed by careful addition of 1200 ml of 2 M HCl. 500 ml of diethyl ether was added, the organic layer was separated, and the aqueous layer was additionally extracted with 2x500 ml of diethyl ether. The combined organic extract was dried over $Na_2SO_4$ and then evaporated to dryness to give white mass. The latter was triturated with 200 ml of n-hexane, filtered through glass frit (G3), and the precipitate was dried in vacuo. This procedure gave 114.6 g (74%) of (3,5-dimethylphenyl)boronic acid.

Anal. calc. for $C_8H_{11}BO_2$: C, 64.06; H, 7.39. Found: C, 64.38; H, 7.72.

$^1$H NMR (DMSO-$d_6$): $\delta$ 7.38 (s, 2H), 7.00 (s, 1H), 3.44(very br.s, 2H), 2.24 (s, 6H).

**2-Methyl-4-(3,5-dimethylphenyl)-5-methoxy-6-tert-butyl-indan-1-one**

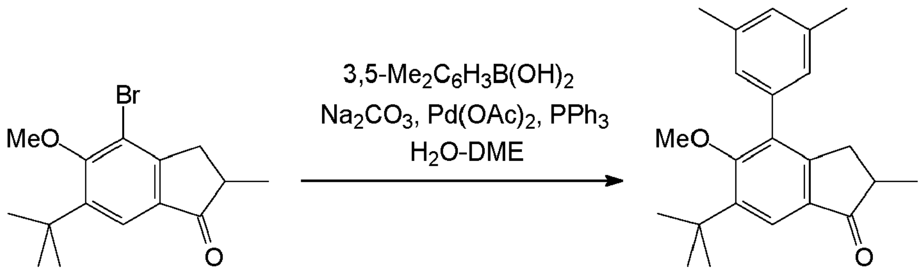


A mixture of 49.14 g (157.9 mmol) of 2-methyl-4-bromo-5-methoxy-6-tert-butylindan-1-one, 29.6 g (197.4 mmol, 1.25 eq.) of (3,5-dimethylphenyl)boronic acid, 45.2 g (427 mmol) of $Na_2CO_3$, 1.87 g (8.3 mmol, 5 mol.%) of $Pd(OAc)_2$, 4.36 g (16.6 mmol, 10 mol.%) of $PPh_3$, 200 ml of water, and 500 ml of 1,2-dimethoxyethane was refluxed for 6.5 h. DME was evaporated on a rotary evaporator, 600 ml of water and 700 ml of dichloromethane were added to the residue. The organic layer was separated, and the aqueous one was additionally extracted with 200 ml of dichloromethane. The combined extract was dried over $K_2CO_3$ and then evaporated to dryness to give a black oil. The crude product was purified by flash chromatography on silica gel 60 (40-63 μm, hexane-dichloromethane = 1:1, vol., then, 1:3, vol.) to give 48.43 g (91%) of 2-methyl-4-(3,5-dimethylphenyl)-5-methoxy-6-*tert*-butylindan-1-one as a brownish oil.

Anal. calc. for $C_{23}H_{28}O_2$: C, 82.10; H, 8.39. Found: C, 82.39; H, 8.52.

$^1H$ NMR ($CDCl_3$): $\delta$ 7.73 (s, 1H), 7.02 (s, 3H), 7.01 (s, 3H), 3.32 (s, 3H), 3.13 (dd, $J$ = 17.5 Hz, $J$ = 7.8 Hz, 1H), 2.68-2.57 (m, 1H), 2.44 (dd, $J$ = 17.5 Hz, $J$ = 3.9 Hz), 2.36 (s, 6H), 1.42 (s, 9H), 1.25 (d, $J$= 7.5 Hz, 3H). $^{13}C\{^1H\}$ NMR ($CDCl_3$): $\delta$ 208.90, 163.50, 152.90, 143.32, 138.08, 136.26, 132.68, 130.84, 129.08, 127.18, 121.30, 60.52, 42.17, 35.37, 34.34, 30.52, 21.38, 16.40.

**2-Methyl-5-tert-butyl-6-methoxy-7-(3,5-dimethylphenyl)-1H-indene**

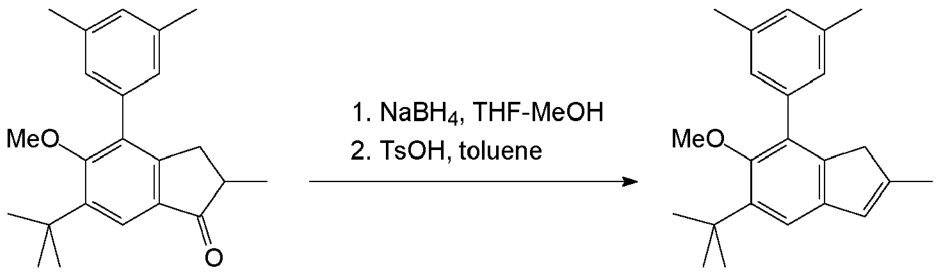


8.2 g (217 mmol) of NaBH4 was added to a solution of 48.43 g (143.9 mmol) of 2-methyl-4-(3,5-dimethylphenyl)-5-methoxy-6-tert-butylindan-I-one in 300 ml of THF cooled to 5°C. Then, 150 ml of methanol was added dropwise to this mixture by vigorous stirring for ca. 7 h at 5°C. The resulting mixture was evaporated to dryness, and the residue was partitioned between 500 ml of dichloromethane and 500 ml of 2 M HCl. The organic layer was separated, the aqueous layer was additionally extracted with 100 ml of dichloromethane. The combined organic extract was evaporated to dryness to give a slightly yellowish oil. To a solution of this oil in 600 ml of toluene 400 mg of TsOH was added, this mixture was refluxed with Dean-Stark head for 10 min and then cooled to room temperature using a water bath. The formed solution was washed by 10% $Na_2CO_3$, the organic layer was separated, the aqueous layer was extracted with 150 ml of dichloromethane. The combined organic extract was dried over $K_2CO_3$ and then passed through a short layer of silica gel 60 (40-63 μm). The silica gel layer was additionally washed by 100 ml of dichloromethane. The combined organic elute was evaporated to dryness, and the resulting oil was dried in vacuum at elevated temperature. This procedure gave 45.34 g (98%) of 2-methyl-5-tert-butyl-6-methoxy-7-(3,5-dimethylphenyl)-1*H*-indene which was used without additional purification.

Anal. calc. for $C_{23}H_{28}O$: C, 86.20; H, 8.81. Found: C, 86.29; H, 9.07.

$^1H$ NMR ($CDCl_3$): $\delta$ 7.20 (s, 1H), 7.08 (br.s, 1H), 6.98 (br.s, 1H), 6.42 (m, 1H), 3.25 (s, 3H), 3.11 (s, 2H), 2.36 (s, 6H), 2.06 (s, 3H), 1.43 (s, 9H). $^{13}C\{^1H\}$ NMR ($CDCl_3$): $\delta$ 154.20, 145.22, 141.78, 140.82, 140.64, 138.30, 137.64, 131.80, 128.44, 127.18, 126.85, 116.98, 60.65, 42.80, 35.12, 31.01, 21.41, 16.65.

**[2-Methyl-4-(3,5-dimethylphenyl)-5-methoxy-6-*tert*-Butyl-1*H*-inden-1-yl] (chloro)dimethylsilane**

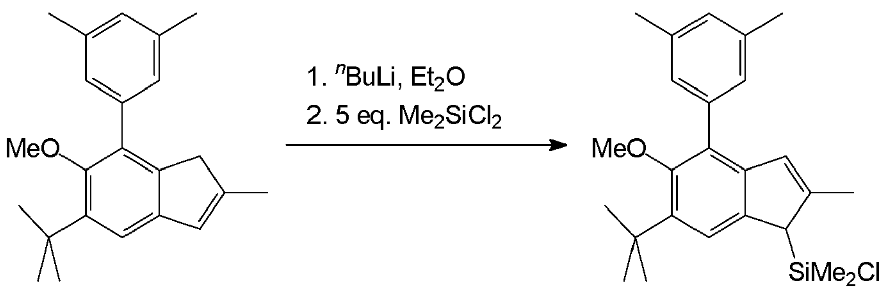


To a solution of 9.0 g (28.08 mmol) of 2-methyl-5-tert-butyl-6-methoxy-7-(3,5-dimethylphenyl)-1*H*-indene in 150 ml of ether, cooled to -50°C, 11.6 ml (28.19 mmol) of 2.43 M "BuLi in hexanes was added in one portion. The resulting mixture was stirred for 6 h at room temperature, then the obtained yellow suspension was cooled to -60°C, and 18.1 g (140.3 mmol, 5 equiv.) of dichlorodimethylsilane was added in one portion. The obtained solution was stirred overnight at room temperature and then filtered through a glass frit (G3). The filtrate was evaporated to dryness to give [2-methyl-4-(3,5-dimethylphenyl)-5-methoxy-6-*tert*-Butyl-1*H*-inden-1-yl](chloro)dimethylsilane as a slightly yellowish oil which was further used without an additional purification.

$^1$H NMR ($CDCl_3$): $\delta$ 7.38 (s, 1H), 7.08 (s, 2H), 6.98 (s, 1H), 6.43 (s, 1H), 3.53 (s, 1H), 3.25 (s, 3H), 2.37 (s, 6H), 2.19 (s, 3H), 1.43 (s, 9H), 0.43 (s, 3H), 0.17 (s, 3H). $^{13}C\{^1H\}$ NMR ($CDCl_3$): $\delta$ 155.78, 145.88, 143.73, 137.98, 137.56, 137.49, 136.74, 128.32, 127.86, 127.55, 126.64, 120.86, 60.46, 49.99, 35.15, 31.16, 21.41, 17.55, 1.11, -0.58.

**1-Methoxy-2-methyl-4-(3,5-Dimethylphenyl)-1,2,3,5,6,7-hexahydro-s-indacene**

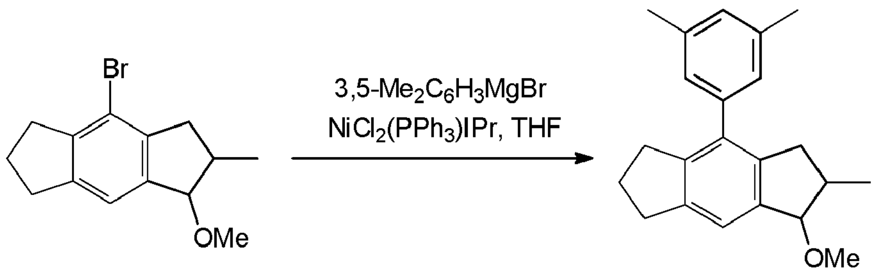


To a mixture of 2.0 g (2.56 mmol, 1.8 mol.%) of $NiCl_2(PPh_3)$IPr and 40.0 g (142.3 mmol) of 4-bromo-1-methoxy-2-methyl-1,2,3,5,6,7-hexahydro-s-indacene, 200 ml (200 mmol, 1.4 eq) of 3,5-dimethylphenylmagnesium bromide 1.0 M in THF was added. The resulting solution was refluxed for 3 h, then cooled to room temperature, and 400 ml of water followed by 500 ml of 1.0 M HCl solution were added. Further on, this mixture was extracted with 600 ml of dichloromethane, the organic layer was separated, and the aqueous layer was extracted with 2x100 ml of dichloromethane. The combined organic extract was evaporated to dryness to give a slightly greenish oil. The product was isolated by flash-chromatography on silica gel 60 (40-63 $\mu$m; eluent: hexanes-dichloromethane = 2:1, vol., then 1:2, vol.). This procedure gave 43.02 g (99%) of 1-methoxy-2-methyl-4-(3,5-dimethylphenyl)-1,2,3,5,6,7-hexahydro-s-indacene as a colorless thick oil as a mixture of two diastereoisomers.

Anal. calc. for $C_{22}H_{26}O$: C, 86.23; H, 8.55. Found: C, 86.07; H, 8.82.

$^1$H NMR ($CDCl_3$), Syn-isomer: $\delta$ 7.21 (s, 1H), 6.94 (br.s, 1H), 6.90 (br.s, 2H), 4.48 (d, *J* = 5.5 Hz, 1H), 3.43 (s, 3H), 2.94 (t, *J* = 7.5 Hz, 2H), 2.87-2.65 (m, 3H), 2.63-2.48 (m, 2H), 2.33 (s, 6H), 2.02 (quin, *J* = 7.5 Hz, 2H), 1.07 (d, *J* = 6.7 Hz, 3H); Anti-isomer: $\delta$ 7.22 (s, 1H), 6.94 (br.s, 1H), 6.89 (br.s, 2H), 4.38 (d, *J* = 4.0 Hz, 1H), 3.48 (s, 3H), 3.06 (dd, *J* = 16.0 Hz, *J* = 7.5 Hz, 1H), 2.93 (t, *J* = 7.3 Hz, 2H), 2.75 (td, *J* = 7.3 Hz, *J*= 3.2 Hz, 2H), 2.51-2.40 (m, 1H), 2.34 (s, 6H), 2.25 (dd, *J* = 16.0 Hz, *J* = 5.0 Hz, 1H), 2.01 (quin, *J*= 7.3 Hz, 2H), 1.11 (d, *J* = 7.1 Hz, 3H). $^{13}C\{^1H\}$ NMR ($CDCl_3$), Syn-isomer: $\delta$ 142.69, 142.49, 141.43, 139.97, 139.80, 137.40, 135.46, 128.34, 126.73, 120.09, 86.29, 56.76, 39.43, 37.59, 33.11, 32.37, 25.92, 21.41, 13.73; Anti-isomer: $\delta$ 143.11, 142.72, 140.76, 139.72, 139.16, 137.37, 135.43, 128.29, 126.60, 119.98, 91.53, 56.45, 40.06, 37.65, 33.03, 32.24, 25.88, 21.36, 19.36.

**4-(3,5-Dimethylphenyl)-6-methyl-1,2,3,5-tetrahydro-s-indacene**

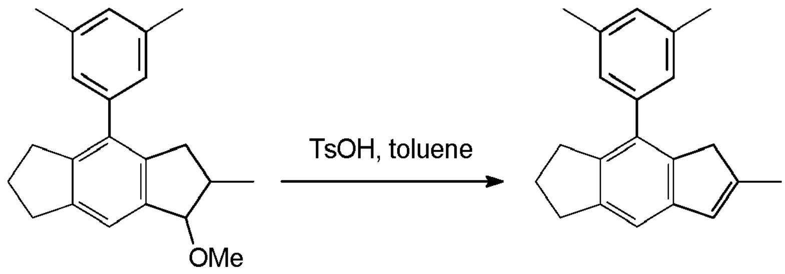


To the solution of 43.02 g (140.4 mmol) 1-methoxy-2-methyl-4-(3,5-dimethylphenyl)-1,2,3,5,6,7-hexahydro-s-indacene in 600 ml of toluene, 200 mg of TsOH was added, and the resulting solution was refluxed using Dean-Stark head for 15 min. After cooling to room temperature the reaction mixture was washed with 200 ml of 10% NaHCOs. The organic layer was separated, and the aqueous layer was additionally extracted with 300 ml of dichloromethane. The combined organic extract was evaporated to dryness to give light orange oil. The product was isolated by flash-chromatography on silica gel 60 (40-63 μm; eluent: hexanes, then hexanes-dichloromethane = 10:1, vol.). This procedure gave 35.66 g (93%) of 4-(3,5-dimethylphenyl)-6-methyl-1,2,3,5-tetrahydro-s-indacene as a slightly yellowish oil which spontaneously solidified to form a white mass.

Anal. calc. for $C_{21}H_{22}$: C, 91.92; H, 8.08. Found: C, 91.78; H, 8.25.

$^1$H NMR ($CDCl_3$): $\delta$ 7.09 (s, 1H), 6.98 (br.s, 2H), 6.96 (br.s, 1H), 6.44 (m, 1H), 3.14 (s, 2H), 2.95 (t, *J* = 7.3 Hz, 2H), 2.76 (t, *J* = 7.3 Hz, 2H), 2.35 (s, 6H), 2.07 (s, 3H), 2.02 (quin, *J* = 7.3 Hz, 2H). $^{13}C\{^1H\}$ NMR ($CDCl_3$): $\delta$ 145.46, 144.71, 142.81, 140.17, 139.80, 137.81, 137.50, 134.33, 128.35, 127.03, 126.48, 114.83, 42.00, 33.23, 32.00, 25.87, 21.38, 16.74.

**[2-Methyl-4-(3,5-dimethylphenyl)-5-methoxy-6-*tert*-Butyl-1*H*-inden-1-yl] [2-methyl-4-(3,5-dimethylphenyl)-1,5,6,7-tetrahydro-s-indacen-1-yl] dimethylsilane**

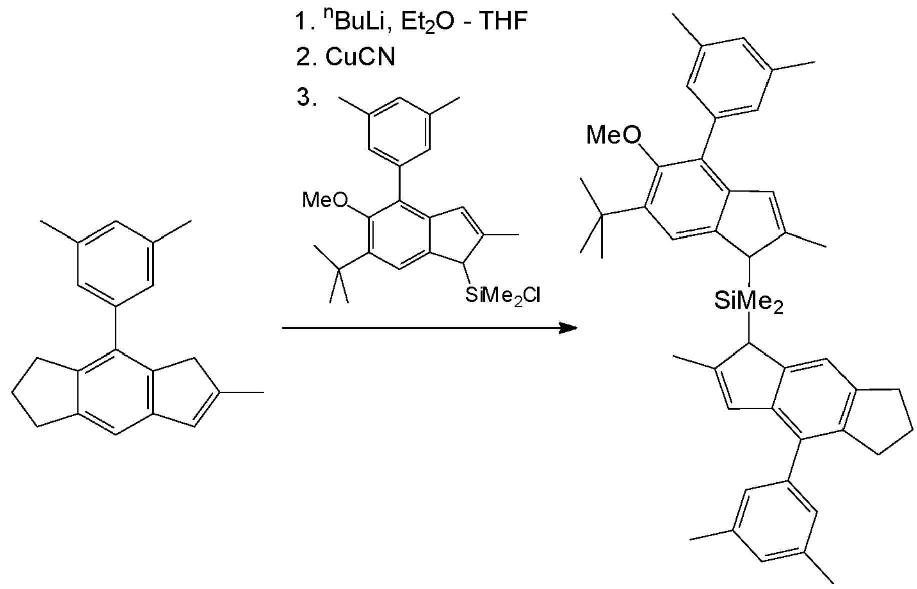


To a solution of 7.71 g (28.1 mmol) of 4-(3,5-dimethylphenyl)-6-methyl-1,2,3,5-tetrahydro-s-indacene in a mixture of 150 ml of ether and 20 ml of THF 11.6 ml (28.19 mmol) of 2.43 M "BuLi in hexanes was added in one portion at -50°C. This mixture was stirred for 6 h at room temperature, then the resulting orange solution was cooled to -50°C, and 150 mg of CuCN was added. The obtained mixture was stirred for 0.5 h at -25°C, then a solution of [2-methyl-4-(3,5-dimethylphenyl)-5-methoxy-6-*tert*-butyl-1*H*-inden-1-yl](chloro)dimethylsilane (prepared above, ca. 28.08 mmol) in 150 ml of ether was added in one portion. This mixture was stirred overnight at room temperature, then filtered through a pad of silica gel 60 (40-63 μm), which was additionally washed by 2x50 ml of dichloromethane. The combined filtrate was evaporated under reduced pressure to give a yellow oil. The product was isolated by flash-chromatography on silica gel 60 (40-63 μm; eluent: hexanes-dichloromethane = 10:1, vol., then 5:1, vol.). This procedure gave 11.95 g (65%) of [2-methyl-4-(3,5-dimethylphenyl)-5-methoxy-6-*tert*-Butyl-1*H*-inden-1-yl][2-methyl-4-(3,5-dimethylphenyl)-1,5,6,7-tetrahydro-*s*-indacen-1-yl]dimethylsilane (as ca. 1:1 mixture of stereoisomers) as a yellowish glassy solid.

Anal. calc. for $C_{46}H_{54}OSi$: C, 84.87; H, 8.36. Found: C, 85.12; H, 8.59.

$^1H$ NMR ($CDCl_3$): $\delta$ 7.48 and 7.33 (2s, sum 1H), 7.26-7.18 (m, 1H), 7.16-7.07 (m, 2H), 7.04-6.95 (m, 4H), 6.51 and 6.45 (2s, sum 2H), 3.69 and 3.65 (2s, sum 2H), 3.28 and 3.26 (2s, sum 3H), 3.01-2.74 (m, 4H), 2.38 ad 2.37 (2s, sum 12H), 2.20 and 2.15 (2s, sum 6H), 2.09-1.97 (m, 2H), 1.43 and 1.42 (2s, sum 9H), -0.17, -0.18, -0.19 and -0.24 (4s, sum 6H). $^{13}C\{^1H\}$ NMR ($CDCl_3$): $\delta$ 155.29, 147.45, 147.39, 145.99, 145.75, 143.93, 143.90, 143.72, 143.69, 142.06, 142.01, 140.08, 140.06, 139.46, 139.37, 139.26, 139.03, 139.00, 138.24, 137.50, 137.34, 137.07, 136.99, 130.39, 128.23, 128.14, 127.92, 127.50, 127.46, 127.26, 126.12, 126.05, 125.99, 125.94, 120.55, 120.51, 118.46, 118.27, 60.49, 47.33, 46.86, 46.76, 35.14, 33.33, 33.28, 32.18, 31.26, 31.21, 25.95, 25.91, 21.44, 17.96, 17.88, -5.27, - 5.39, -5.50, -5.82.

***Anti*-dimethylsilanediyl[2-methyl-4-(3,5-dimethylphenyl)-5-methoxy-6-*tert*-butylinden-1-yl][2-methyl-4-(3,5-dimethylphenyl)-1,5,6,7-tetrahydro-s-indacen-1-yl]zirconium dichloride**

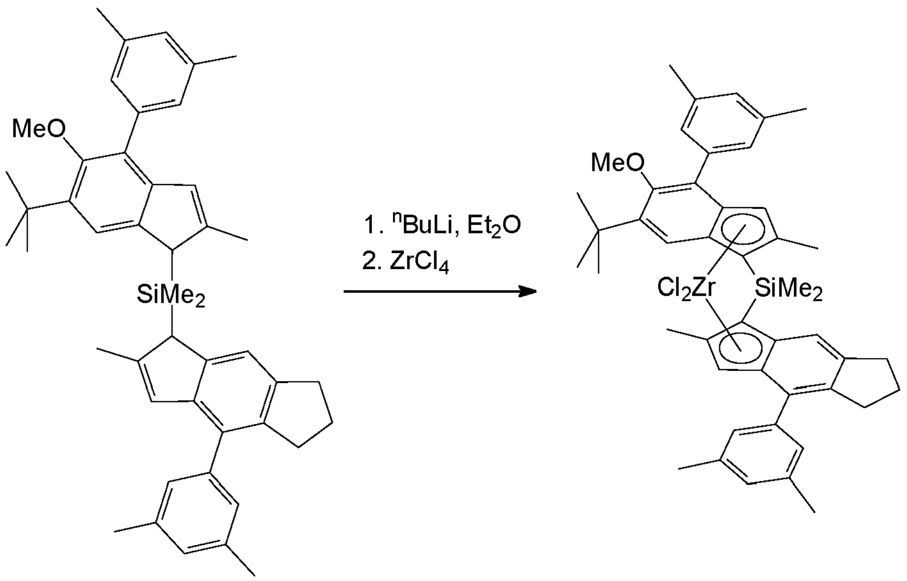


To a solution of 11.95 g (18.36 mol) of [2-methyl-4-(3,5-dimethylphenyl)-5-methoxy-6-*tert*-butyl-1*H*-inden-1-yl][2-methyl-4-(3,5-dimethylphenyl)-1,5,6,7-tetrahydro-s-indacen-1-yl]dimethylsilane (prepared above) in 200 ml of ether, cooled to -50°C, 15.1 ml (35.7 mmol) of 2.43 M $^n$BuLi in hexanes was added in one portion. This mixture was stirred for 3 h at room temperature, then the resulting red solution was cooled to -78°C, and 4.28 g (18.37 mmol) of $ZrCl_4$ was added. The reaction mixture was stirred for 24 h at room temperature to give light red solution with orange precipitate. This mixture was evaporated to dryness. The residue was treated with 250 ml of hot toluene, and the formed suspension was filtered through glass frit (G4). The filtrate was evaporated to 40 ml. Red powder precipitated from this solution overnight at room temperature was collected, washed with 10 ml of cold toluene, and dried in vacuum. This procedure gave 0.6 g of *syn*-zirconocene. The mother liquor was evaporated to ca. 35 ml, and 15 ml of n-hexane was added to the warm solution. The red powder precipitated from this solution overnight at room temperature was collected and dried in vacuum. This procedure gave 3.49 g *syn*-zirconocene. The mother liquor was evaporated to ca. 20 ml, and 30 ml of n-hexane was added to the warm solution. The yellow powder precipitated from this solution overnight at room temperature was collected and dried in vacuum. This procedure gave 4.76 g *anti*-zirconocene as a solvate with toluene (x 0.6 toluene) contaminated with ca. 2% of *syn*-isomer. Thus, the total yield of *syn*- and *anti*-zirconocenes isolated in this synthesis was 8.85 g (59%).

*Anti*-dimethylsilanediyl[2-methyl-4-(3,5-dimethylphenyl)-5-methoxy-6-*tert*-butylinden-1-yl][2-methyl-4-(3,5-dimethylphenyl)-1,5,6,7-tetrahydro-s-indacen-1-yl]zirconium dichloride:

Anal. calc. for $C_{46}H_{52}Cl_2OSiZr \times 0.6C_7H_8$: C, 69.59; H, 6.61. Found: C, 69.74; H, 6.68.

$^1H$ NMR ($CDCl_3$): $\delta$ 7.47 (s, 1H), 7.40 (s, 1H), 7.37-7.03 (m, 4H), 6.95 (s, 2H), 6.71 (s, 1H), 6.55 (s, 1H), 3.43 (s, 3H), 3.03-2.96 (m, 2H), 2.96-2.87 (m, 1H), 2.87-2.76 (m, 1H), 2.34 and 2.33 (2s, sum 12H), 2.19 and 2.18 (2s, sum 6H), 2.06-1.94 (m, 2H), 1.38 (s, 9H), 1.28 (s, 3H), 1.27 (s, 3H). $^{13}C\{^1H\}$ NMR ($CDCl_3$,): $\delta$ 159.73, 144.59, 143.99, 143.00, 138.26, 137.84, 137.59, 136.80, 135.35, 133.85, 133.63, 132.95, 132.52, 128.90, 128.80, 127.40, 126.95, 126.87, 126.65, 122.89, 121.61, 121.53, 120.82, 117.98, 81.77, 81.31, 62.62, 35.73, 33.20, 32.12, 30.37, 26.49, 21.47, 21.38, 18.40, 18.26, 2.64, 2.54.

*Syn-* dimethylsilanediyl[2-methyl-4-(3,5-dimethylphenyl)-5-methoxy-6-tert-butylinden-1-yl][2-methyl-4-(3,5-dimethylphenyl)-1,5,6,7-tetrahydro-s-indacen-1-yl]zirconium dichloride.

Anal. calc. for $C_{46}H_{52}Cl_2OSiZr$: C, 68.11; H, 6.46. Found: C, 68.37; H, 6.65.

$^1$H NMR ($CDCl_3$): $\delta$ 7.51 (s, 1H), 7.39 (s, 1H), 7.36-6.99 (m, 4H), 6.95 (s, 2H), 6.60 (s, 1H), 6.44 (s, 1H), 3.27 (s, 3H), 2.91-2.75 (m, 4H), 2.38 and 2.34 (2s, sum 18H), 1.99-1.87 (m, 1H), 1.87-1.74 (m, 1H), 1.42 (s, 3H), 1.36 (s, 9H), 1.19 (s, 3H). $^{13}C\{^1H\}$ NMR ($CDCl_3$,): $\delta$ 158.74, 143.41, 142.84, 142.31, 138.30, 137.77, 137.55, 136.85, 135.87, 135.73, 134.99, 134.75, 131.64, 128.83, 128.76, 127.97, 127.32, 126.82, 126.22, 123.91, 121.35, 121.02, 120.85, 118.56, 83.47, 83.08, 62.32, 35.53, 33.33, 31.96, 30.33, 26.53, 21.45 (two resonances), 18.56, 18.43, 2.93, 2.65.

**Synthesis of metallocene MC2 for Cat. 2**

**[2-Methyl-4-(3,5-dimethylphenyl)-5-methoxy-6-tert-butyl-1H-inden-1-yl] chlorodimethylsilane**

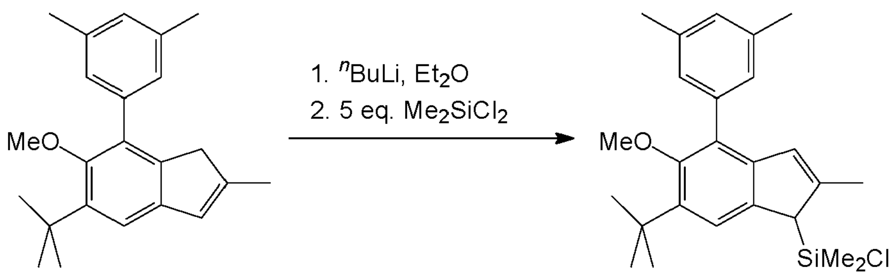


$^n$BuLi in hexanes (2.43 M, 25.2 ml, 61.24 mmol) was added in one portion to a solution of 19.66 g (61.35 mmol) of 2-methyl-5-*tert*-butyl-6-methoxy-7-(3,5-dimethylphenyl)-1*H*-indene in 300 ml of ether cooled to -50°C. The resulting mixture was stirred for 4 h at room temperature, then the resulting yellow suspension was cooled to -60°C, and 40.0 ml (42.8 g, 331.6 mmol, 5.4 eqv.) of dichlorodimethylsilane was added in one portion. The obtained solution was stirred overnight at room temperature and then filtered through a glass frit (G3). The filtrate was evaporated to dryness to give [2-methyl-4-(3,5-dimethylphenyl)-5-methoxy-6-*tert*-butyl-1*H*-inden-1-yl]chlorodimethylsilane as a slightly yellowish oil which was further used without an additional purification.

$^1$H NMR ($CDCl_3$): $\delta$ 7.38 (s, 1H), 7.08 (s, 2H), 6.98 (s, 1H), 6.43 (s, 1H), 3.53 (s, 1H), 3.25 (s, 3H), 2.37 (s, 6H), 2.19 (s, 3H), 1.43 (s, 9H), 0.43 (s, 3H), 0.17 (s, 3H). $^{13}C\{^1H\}$ NMR ($CDCl_3$): $\delta$ 155.78, 145.88, 143.73, 137.98, 137.56, 137.49, 136.74, 128.32, 127.86, 127.55, 126.64, 120.86, 60.46, 49.99, 35.15, 31.16, 21.41, 17.55, 1.11, -0.58.

**[2-Methyl-4-(3,5-dimethylphenyl)-5-methoxy-6-tert-butyl-inden-1-yl] [2-methyl-4-(3,5-dimethylphenyl)-1,5,6,7-tetrahydro-s-indacen-1-yl] dimethylsilane**

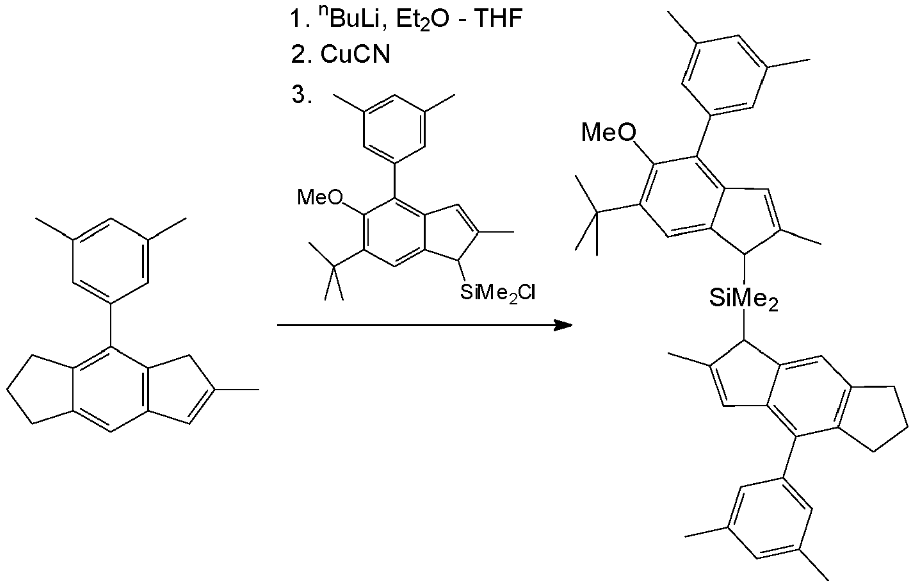


$^n$BuLi in hexanes (2.43 M, 25.2 ml, 61.24 mmol) was added in one portion to a solution of 16.83 g (61.33 mmol) of 4-(3,5-dimethylphenyl)-6-methyl-1,2,3,5-tetrahydro-*s*-indacene in a mixture of 300 ml of ether and 40 ml of THF, cooled to -50°C. This mixture was stirred overnight at room temperature, then the resulting reddish solution was cooled to -50°C, and 300 mg of CuCN was added. The obtained mixture was stirred for 0.5 h at -25°C, then a solution of [2-methyl-4-(3,5-dimethylphenyl)-5-methoxy-6-*tert*-butyl-1*H*-inden-1-yl]chlorodimethylsilane (prepared above, ca. 61.24 mmol) in 150 ml of ether was added in one portion. This mixture was stirred overnight at room temperature, then filtered through a pad of silica gel 60 (40-63 μm), which was additionally washed with 2x50 ml of dichloromethane. The combined filtrate was evaporated under reduced pressure, and the residue was dried in vacuum at elevated temperature. This procedure gave 39.22 g (98%) of [2-methyl-4-(3,5-dimethylphenyl)-5-methoxy-6-*tert*-butyl-1*H*-inden-1-yl] [2-methyl-4-(3,5-dimethylphenyl)-1,5,6,7-tetrahydro-*s*-indacen-1-yl]dimethylsilane (a ca. 3:2 mixture of stereoisomers) as a reddish glass.

$^1$H NMR ($CDCl_3$): $\delta$ 7.48 and 7.33 (2s, sum 1H), 7.26-7.18 (m, 1H), 7.16-7.07 (m, 2H), 7.04-6.95 (m, 4H), 6.51 and 6.45 (2s, sum 2H), 3.69 and 3.65 (2s, sum 2H), 3.28 and 3.26 (2s, sum 3H), 3.01-2.74 (m, 4H), 2.38 ad 2.37 (2s, sum 12H), 2.20 and 2.15 (2s, sum 6H), 2.09-1.97 (m, 2H), 1.43 and 1.42 (2s, sum 9H), -0.17, -0.18, -0.19 and -0.24 (4s, sum 6H). $^{13}$C {$^1$H} NMR ($CDCl_3$): $\delta$ 155.29, 147.45, 147.39, 145.99, 145.75, 143.93, 143.90, 143.72, 143.69, 142.06, 142.01, 140.08, 140.06, 139.46, 139.37, 139.26, 139.03, 139.00, 138.24, 137.50, 137.34, 137.07, 136.99, 130.39, 128.23, 128.14, 127.92, 127.50, 127.46, 127.26, 126.12, 126.05, 125.99, 125.94, 120.55, 120.51, 118.46, 118.27, 60.49, 47.33, 46.86, 46.76, 35.14, 33.33, 33.28, 32.18, 31.26, 31.21, 25.95, 25.91, 21.44, 17.96, 17.88, -5.27, -5.39, -5.50, -5.82.

***Anti*-dimethylsilanediyl[2-methyl-4-(3,5-dimethylphenyl)-5-methoxy-6-tert-butyl-inden-1-yl][2-methyl-4-(3,5-dimethylphenyl)-1,5,6,7-tetrahydro-s-indacen-1-yl]hafnium dichloride**

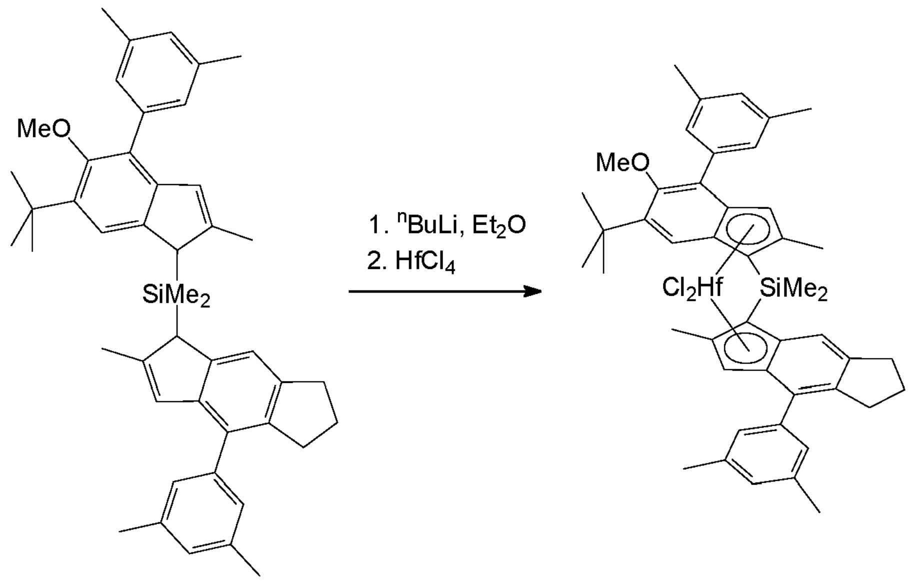


$^{n}$BuLi in hexanes (2.43 M, 49.6 ml, 120.5 mmol) was added in one portion to a solution of 39.22 g (60.25 mmol) of [2-methyl-4-(3,5-dimethylphenyl)-5-methoxy-6-tert-butyl-1*H*-inden-1-yl] [2-methyl-4-(3,5 -dimethylphenyl)-1,5,6,7-tetrahydro-s-indacen-1-yl]dimethylsilane (prepared above) in 400 ml of ether, cooled to -50°C. This mixture was stirred overnight at room temperature. The resulting red solution was then cooled to -78°C, and 19.3 g (60.26 mmol) of $HfCl_4$ was added. The reaction mixture was stirred for 24 h at room temperature to give an orange suspension. The precipitate was filtered off (G4), then washed with 30 ml of cold ether. On the evidence of NMR spectroscopy, this precipitate was pure *syn*-hafnocene dichloride (with LiCl), while the filtrate included a ca. 4/1 mixture of *anti*- and *syn*-hafnocene dichlorides (in favor to *anti*-) contaminated with some other impurities. The precipitate was dissolved in 150 ml of hot toluene, and the formed suspension was filtered to remove LiCl through glass frit (G4). The filtrate was evaporated to ca. 45 ml. Orange sold material precipitated overnight at room temperature was filtered off (G3) and then dried in vacuum. This procedure gave 8.1 g (15%) of pure syn-complex. The mother liquor was evaporated almost to dryness, and the residue was triturated with 20 ml of n-hexane to give 2.6 g (4.8%) of *syn*-hafnocene dichloride as an orange powder. The ether mother liquor was evaporated to ca. 60 ml, the precipitated yellow powder was filtered off (G4), washed with 20 ml of cold (0°C) ether, and then dried under vacuum. This procedure gave 10.2 g (19%) of pure *anti*-hafnocene dichloride. Thus, the total yield of *anti*- and *syn*-hafnocene dichlorides isolated in this synthesis was 20.9 g (39%).

*Anti*-dimethylsilanediyl[2-methyl-4-(3,5-dimethylphenyl)-5-methoxy-6-*tert*-butyl-inden-1-yl][2-methyl-4-(3,5-dimethylphenyl)-1,5,6,7-tetrahydro-*s*-indacen-1-yl]hafnium dichloride:
Anal. calc. for $C_{46}H_{52}Cl_2OSiHf$: C, 61.50; H, 5.83. Found: C, 61.38; H, 6.15.

$^1H$ NMR($CDCl_3$): $\delta$ 7.51 (s, 1H), 7.43 (s, 1H), 7.34-7.02 (br.m, 4H), 6.94 (s, 2H), 6.61 (s, 1H), 6.46 (s, 1H), 3.42 (s, 3H), 3.11-2.79 (m, 4H), 2.33 (s, 6H), 2.32 (s, 6H), 2.27 (s, 6H), 2.07-1.92 (m, 2H), 1.38 (s, 9H), 1.27 (s, 3H), 1.26 (s, 3H). $^{13}C\{^1H\}$ NMR ($CDCl_3$,): $\delta$ 159.55, 144.17, 143.58, 142.84, 138.38, 137.82, 137.57, 136.94, 133.09, 132.67, 132.40, 132.11, 131.23, 128.84, 128.76, 127.40, 126.88, 126.53, 124.97, 121.28, 120.84, 119.76, 119.71, 117.90, 82.92, 82.40, 62.62, 35.68, 33.11, 32.07, 30.43, 26.56, 21.46, 21.38, 18.26, 18.12, 2.63, 2.53.

*Syn*-dimethylsilanediyl[2-methyl-4-(3,5-dimethylphenyl)-5-methoxy-6-*tert*-butyl-inden-1-yl][2-methyl-4-(3,5-dimethylphenyl)-1,5,6,7-tetrahydro-s-indacen-1-yl]hafnium dichloride:
Anal. calc. for $C_{46}H_{52}Cl_2OSiHf$: C, 61.50; H, 5.83. Found: C, 61.59; H, 6.06.

$^1H$ NMR ($CDCl_3$): $\delta$ 7.53 (s, 1H), 7.41 (s, 1H), 7.29-7.06 (m, 4H), 6.94 (s, 2H), 6.50 (s, 1H), 6.35 (s, 1H), 3.26 (s, 3H), 2.95-2.77 (m, 4H), 2.49 (s, 3H), 2.46 (s, 3H), 2.33 (2s, sum 12H), 1.99-1.86 (m, 1H), 1.86-1.73 (m, 1H), 1.40 (s, 3H), 1.37 (s, 9H), 1.18 (s, 3H). $^{13}C\{^1H\}$ NMR ($CDCl_3$,): $\delta$ 158.61, 143.03, 142.46, 142.16, 138.42, 137.73, 137.52, 136.98, 135.33, 134.60, 133.69, 132.53, 131.19, 128.79, 128.71, 127.34, 126.85, 126.00, 125.76, 121.95, 121.45, 119.12, 118.91, 118.55, 84.66, 84.26, 62.31, 35.48, 33.25, 31.94, 30.40, 26.60, 21.44, 18.44, 18.31, 2.93, 2.61

**Catalyst preparation examples**

Materials

MC1 and MC2 as described above were used in preparing catalysts.

MAO was used as a 30 wt-% solution in toluene. Trityl tetrakis(pentafluorophenyl)borate (Boulder Chemicals)

was used as purchased. As surfactants were used perfluoroalkylethyl acrylate esters (CAS number 65605-70-1) purchased from the Cytonix corporation, dried over activated molecular sieves (2 times) and degassed by argon bubbling prior to use (S1) or 1H,1H-Perfluoro(2-methyl-3-oxahexan-1-ol) (CAS 26537-88-2) purchased from Unimatec, dried over activated molecular sieves (2 times) and degassed by argon bubbling prior to use (S2). Hexadecafluoro-1,3-dimethylyclohexane (PFC) (CAS number 335-27-3) was obtained from commercial sources and dried over activated molecular sieves (2 times) and degassed by argon bubbling prior to use. Propylene is provided by Borealis and adequately purified before use. Triethylaluminum was purchased from Crompton and used in pure form. Hydrogen is provided by AGA and purified before use.

All the chemicals and chemical reactions were handled under an inert gas atmosphere using Schlenk and glovebox techniques, with oven-dried glassware, syringes, needles or cannulas.

Cat. 1 preparation

Inside the glovebox, surfactant S2 solution (28.8 mg of dry and degassed S2 dilute in 0.2 mL toluene) was added dropwise to 5 mL of 30 wt.-% Chemtura MAO. The solutions were left under stirring for 10 minutes. Then, 98.7 mg of metallocene MC1 was added to MAO/surfactant. After 60 minutes stirring, 104.9 mg of trityl tetrakis(pentafluorophenyl) borate was added.

After 60 minutes stirring, the surfactant-MAO-metallocene-borate solution were added into a 50mL emulsification glass reactor containing 40mL of PFC at -10 °C and equipped with an overhead stirrer (stirring speed = 600 rpm). A red emulsion formed immediately and stirred during 15 minutes at -10 °C / 600rpm. Then the emulsion was transferred via a 2/4 Teflon tube to 100 mL of hot PFC at 90 °C and stirred at 600rpm until the transfer is completed. Then the speed was reduced to 300 rpm. After 15 minutes stirring, the oil bath was removed and the stirrer turned off. The catalyst was left to settle up on top of the PFC and after 35 minutes the solvent was siphoned off. The remaining catalyst was dried during 2 hours at 50 °C over an argon flow. 0.90 g of a red free flowing powder was obtained.

Cat. 2 preparation

Inside the glovebox, surfactant S2 solution (28.8 mg of dry and degassed S2 dilute in 0.2 mL toluene) was added dropwise to 5 mL of 30 wt.-% Chemtura MAO. The solutions were left under stirring for 10 minutes. Then, 102,23 mg of metallocene MC2 was added to MAO/surfactant. After 60 minutes, 104.9 mg of trityl tetrakis(pentafluorophenyl)borate was added. The mixture was left to react at room temperature inside the glovebox for 60 min. Then, the surfactant-MAO-metallocene-borate solution were added into a 50mL emulsification glass reactor containing 40mL of PFC at -10 °C and equipped with an overhead stirrer (stirring speed = 600 rpm). A yellow emulsion formed immediately and stirred during 15 minutes at -10 °C / 600rpm. Then the emulsion was transferred via a 2/4 Teflon tube to 100 mL of hot PFC at 90 °C and stirred at 600rpm until the transfer is completed. Then the speed was reduced to 300 rpm. After 15 minutes stirring, the oil bath was removed and the stirrer turned off. The catalyst was left to settle up on top of the PFC and after 35 minutes the solvent was siphoned off. The remaining catalyst was dried during 2 hours at 50 °C over an argon flow. 0.67 g of a yellow free flowing powder was obtained.

**Table 1** Metallocene catalysts

| Catalyst | MC | ICP Al (wt.-%) | ICP Hf (wt.-%) | ICP Zr (wt.-%) | Al/M* (mol/mol) | MC (wt.-%) |
|---|---|---|---|---|---|---|
| Cat.1 | MC1 | 30.2 | - | 0.55 | 185 | 5.2 |
| Cat.2 | MC2 | 31.4 | 1.19 | - | 174 | 6.0 |
| *M = Zr/Hf (i.e. metal) | | | | | | |

**2. Polymerization conditions**

PP1

The polymerization was carried out in a 5L bench scale reactor. 12 mg of Cat. 1, 1000g of propylene, 131g of ethylene were fed to the reactor and the polymerization was conducted at 70°C, 31 barg pressure, for 30min. The yield was 484 g of propylene-ethylene copolymer.

PP2

The polymerization was carried out in a 21 L bench scale reactor. 85 mg of Cat. 2, 4435g of propylene, 0.13g of $H_2$,

and 153 g of hexene were fed into the reactor under 75°C, 31 barg pressure and the reaction is carried for 60 min. The yield was 1184 g of propylene-hexene copolymer.

The properties of PP1 and PP2 are given in Table 2:

**Table 2** Properties of PP1 and PP2

| | | PP1 | PP2 |
|---|---|---|---|
| $MFR_2$ | [g/10 min] | 0.11 | 0.84 |
| C2 content | [mol-%] | 5.9 | 0.0 |
| C6 content | [mol-%] | 0.0 | 1.4 |
| 2,1-regiodefects | [mol-%] | 0.20 | 0.24 |
| XCS | [wt.-%] | 4.1 | 0.14 |
| $T_m$ | [°C] | 121 | 138 |

### 3. Compounding of inventive and comparative examples

The inventive and comparative examples were compounded in a ZSK 18 twin screw extruder with a melt temperature of 210 °C and a throughput rate of 7 kg/h, according to the recipes given in Table 3:

NU CGNA-7588 (quino[2,3-b]acridine-6,7,13,14(5H,12H)-tetrone, CAS No: 1503-48-6), commercially available from BASF SE.

AO Irganox B215, a synergistic 2: 1 blend of antioxidants Irgafos 168 (tris(2,4-ditert-butylphenyl)phosphite, CAS No: 31570-04-4) and Irganox 1010 (pentaerythritol tetrakis [3 - [3,5 -di-tert-butyl-4-hydroxyphenyl] propionate], CAS No: 6683-19-8), available from BASF SE.

CaSt calcium stearate (CAS No: 1592-23-0), commercially available from Bärlocher GmbH under the trade name CEASIT-1.

**Table 3:** Recipes of the inventive and comparative examples

| | | CE1 | CE2 | IE1 |
|---|---|---|---|---|
| PP1 | [wt%] | 99.79 | - | 49.90 |
| PP2 | [wt%] | - | 99.79 | 49.89 |
| NU | [wt%] | 0.01 | 0.01 | 0.01 |
| AO | [wt%] | 0.15 | 0.15 | 0.15 |
| CaSt | [wt%] | 0.05 | 0.05 | 0.05 |

**Table 4:** Properties of the inventive and comparative examples

| | | CE1 | CE2 | IE1 |
|---|---|---|---|---|
| $MFR_2$ | [g/10min] | 0.11 | 0.84 | 0.33 |
| C2 content | [mol-%] | 5.9 | 0 | 3.0 |
| C6 content | [mol-%] | 0 | 1.4 | 0.7 |
| Flex Mod | [MPa] | 730 | 990 | 820 |
| Charpy NIS (23°C) | [kJ/m$^2$] | 20.7 | 11.1 | 46.7 |
| Charpy NIS (0°C) | [kJ/m$^2$] | 2.7 | 2.0 | 3.4 |
| **DSC** | | | | |
| $T_c$ | [°C] | 87 | 104 | 101 |
| $T_{m1}$ | [°C] | 121 | 139 | 135 |
| $H_{m1}$ | [J/g] | 22.5 | 26 | 19 |

(continued)

| DSC | | | | |
|---|---|---|---|---|
| $T_{m2}$ | [°C] | 116 | 127 | 123 |
| $H_{m2}$ | [J/g] | 47.4 | 60 | 58 |
| **WAXS** | | | | |
| Xc | [%] | 63.1 | 55.1 | 55.3 |
| $K_\beta$ | [%] | 1 | 64 | 63 |
| $K_\gamma$ | [%] | 64 | 9 | 17 |

As can be seen from Table 4, IE1 (which contains both a C3C2 fraction and a C3C6 fraction) has a high $K_\beta$ and impressive Charpy notched impact strength. CE2, which contains only a C3C6 copolymer has a high beta phase content but very poor impact strength. CE1, which contains only a C3C2 copolymer has a very low amount of beta phase. It thus appears that a combination of two propylene copolymers is required for optimum properties.

## Claims

**1.** A polypropylene composition (PC) comprising:

a) from 30 to 70 wt.-%, relative to the total weight of the polypropylene composition (PC), of a first propylene copolymer (PP1) comprising propylene monomers and a first comonomer selected from the group consisting of ethylene and $C_{4-8}$ alpha olefins;
b) from 30 to 70 wt.-%, relative to the total weight of the polypropylene composition (PC), of a second propylene copolymer (PP2) comprising propylene monomers and a second comonomer selected from the group consisting of ethylene and $C_{4-8}$ alpha olefins; and
c) from 0.1 to 5000 ppm, relative to the total weight of the polypropylene composition (PC), of a beta nucleating agent (NU);
wherein the second comonomer is different to the first comonomer, the first propylene copolymer (PP1) is free from the second comonomer, and the second propylene copolymer (PP2) is free from the first comonomer,
wherein the combined amounts of the first propylene copolymer (PP1), the second propylene copolymer (PP2), and the beta nucleating agent (NU) add up to at least 90 wt.-%, relative to the total weight of the polypropylene composition (PC), and
the polypropylene composition (PC) has a melt flow rate ($MFR_2$), determined according to ISO 1133 at 230 °C at a load of 2.16 kg, in the range from 0.10 to 4.00 g/10 min.

**2.** The polypropylene composition (PC) according to claim 1, wherein the first comonomer is ethylene and the second comonomer is selected from the group consisting of $C_{4-8}$ alpha olefins, more preferably from the group consisting of $C_{4-6}$ alpha olefins, yet more preferably from the group consisting of 1-butene and 1-hexene, most preferably the second comonomer is 1-hexene.

**3.** The polypropylene composition (PC) according to claim 1 or claim 2, wherein:

a) the first propylene copolymer (PP1) has a comonomer content, as determined by quantitative $^{13}C$-NMR spectroscopy, in the range from 3.0 to 9.0 mol-%, more preferably in the range from 4.0 to 8.0 mol-%, most preferably in the range from 5.0 to 7.0 mol-%, relative to the total number of monomer+comonomer units of the first propylene copolymer (PP1), and/or
b) wherein the second propylene copolymer (PP2) has a comonomer content, as determined by quantitative $^{13}C$-NMR spectroscopy, in the range from 0.5 to 3.0 mol-%, more preferably in the range from 0.8 to 2.5 mol-%, most preferably in the range from 1.0 to 2.0 mol-%, relative to the total number of monomer+comonomer units of the second propylene copolymer (PP2).

**4.** The polypropylene composition (PC) according to any one of the preceding claims, wherein:

a) the first propylene copolymer (PP1) has a content of 2,1-regiodefects, as determined by quantitative $^{13}C$-NMR

spectroscopy, in the range from 0.05 to 1.40 mol-%, more preferably in the range from 0.10 to 1.00 mol-%, most preferably in the range from 0.20 to 0.70 mol-%, and/or
b) wherein the second propylene copolymer (PP2) has a content of 2,1-regiodefects, as determined by quantitative $^{13}C$-NMR spectroscopy, in the range from 0.05 to 1.40 mol-%, more preferably in the range from 0.10 to 1.00 mol-%, most preferably in the range from 0.20 to 0.70 mol-%.

**5.** The polypropylene composition (PC) according to any one of the preceding claims, wherein:

a) the first propylene copolymer (PP1) has a melting temperature, determined according to ISO 11357, in the range from 110 to 130 °C, more preferably in the range from 115 to 125 °C most preferably in the range from 118 to 123 °C, and/or
b) wherein the second propylene copolymer (PP2) has a melting temperature, determined according to ISO 11357, in the range from 125 to 150 °C, more preferably in the range from 130 to 145 °C most preferably in the range from 135 to 140 °C.

**6.** The polypropylene composition (PC) according to any one of the preceding claims, having a total comonomer content, as determined by quantitative $^{13}C$-NMR spectroscopy, in the range from 1.8 to 6.0 mol-%, more preferably in the range from 2.5 to 5.0 mol-%, most preferably in the range from 3.0 to 4.5 mol-%, relative to the total number of monomer+comonomer units of the polypropylene composition (PC).

**7.** The polypropylene composition (PC) according to any one of the preceding claims, having an ethylene content (C2), as determined by quantitative $^{13}C$-NMR spectroscopy, in the range from 1.5 to 4.5 mol-%, relative to the total number of monomer+comonomer units of the polypropylene composition (PC), and a content of comonomers selected from the group consisting of $C_{4-8}$ alpha olefins, more preferably a 1-hexene content, in the range from 0.3 to 1.5 mol-%, relative to the total number of monomer+comonomer units of the polypropylene composition (PC).

**8.** The polypropylene composition (PC) according to any one of the preceding claims, wherein the beta nucleating agent (NU) is an organic beta nucleating agent, more preferably a carboxylate-free organic beta nucleating agent, yet more preferably a quinacridone derivative, most preferably is Quino[2,3-b]acridine-6,7,13,14(5H,12H)-tetrone.

**9.** The polypropylene composition (PC) according to any one of the preceding claims, comprising:

a) from 40 to 60 wt.-%, more preferably 45 to 55 wt.-%, relative to the total weight of the polypropylene composition (PC), of the first propylene copolymer (PP1);
b) from 40 to 60 wt.-%, more preferably 45 to 55 wt.-%, relative to the total weight of the polypropylene composition (PC), of the second propylene copolymer (PP2); and
c) from 1 to 1000 ppm, more preferably from 10 to 500 ppm, relative to the total weight of the polypropylene composition (PC), of the beta nucleating agent (NU).

**10.** The polypropylene composition (PC) according to any one of the preceding claims, having a crystallisation temperature ($T_c$), determined according to ISO 11357, in the range from 90 to 120 °C, more preferably in the range from 95 to 115 °C, most preferably in the range from 100 to 110 °C.

**11.** The polypropylene composition (PC) according to any one of the preceding claims, having a melting temperature ($T_m$), determined according to ISO 11357, in the range from 125 to 150 °C, more preferably in the range from 128 to 145 °C, most preferably in the range from 131 to 140 °C.

**12.** The polypropylene composition (PC) according to any one of the preceding claims, having one or more, preferably all, of the following properties:

a) a flexural modulus, determined according to ISO 178 on $80 \times 10 \times 4$ $mm^3$ injection-moulded specimens prepared according to ISO 19069-2, in the range from 750 to 1500 MPa, more preferably in the range from 780 to 1200 MPa, most preferably in the range from 800 to 1000 MPa;
b) a Charpy Notched Impact Strength (NIS) at 23 °C, measured according to ISO 179-1 eA on $80 \times 10 \times 4$ $mm^3$ injection-moulded specimens prepared according to ISO 19069-2, in the range from 30 to 100 $kJ/m^2$, more preferably in the range from 35 to 80 $kJ/m^2$, most preferably in the range from 40 to 60 $kJ/m^2$; and/or
c) a Charpy Notched Impact Strength (NIS) at 0 °C, measured according to ISO 179-1 eA on $80 \times 10 \times 4$ $mm^3$ injection-moulded specimens prepared according to ISO 19069-2, in the range from 2.0 to 10.0 $kJ/m^2$, more

preferably in the range from 2.5 to 8.0 $kJ/m^2$, most preferably in the range from 3.0 to 6.0 $kJ/m^2$.

**13.** The polypropylene composition (PC) according to any one of the preceding claims, having a beta phase content ($K_\beta$), determined by wide angle x-ray scattering (WAXS) on a specimen as defined in the determination methods, in the range from 50 to 99%, more preferably in the range from 55 to 95%, most preferably in the range from 60 to 90%.

**14.** An article, being either an extruded or a moulded article, comprising at least 90 wt.-%, more preferably at least 95 wt.-%, most preferably at least 98 wt.-%, relative to the total weight of the article, of the polypropylene composition (PC) according to any one of the preceding claims.

Europäisches Patentamt
European Patent Office
Office européen des brevets

# EUROPEAN SEARCH REPORT

Application Number
EP 24 18 9158

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 8 586 163 B2 (MALM BO [FI]; BERNREITNER KLAUS [AT] ET AL.) 19 November 2013 (2013-11-19) * examples 1-2 * | 1-14 | INV. C08L23/12 C08L23/14 |
| A | US 2024/158623 A1 (GKOURMPIS THOMAS [SE] ET AL) 16 May 2024 (2024-05-16) * example 6 * | 1-14 | |
| A | WO 2017/076772 A1 (SABIC GLOBAL TECHNOLOGIES BV [NL]) 11 May 2017 (2017-05-11) * examples 12-13,20 * | 1-14 | |
| A | EP 2 562 215 B1 (BOREALIS AG [AT]) 30 March 2016 (2016-03-30) * examples 1-3 * | 1-14 | |
| A | US 2011/315264 A1 (BERNREITNER KLAUS [AT] ET AL) 29 December 2011 (2011-12-29) * example 1 * | 1-14 | TECHNICAL FIELDS SEARCHED (IPC) |
| A | US 2019/225723 A1 (GAHLEITNER MARKUS [AT] ET AL) 25 July 2019 (2019-07-25) * example 1 * | 1-14 | C08L |

The present search report has been drawn up for all claims

1

| Place of search | Date of completion of the search | Examiner |
|---|---|---|
| Munich | 23 December 2024 | Ritter, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 18 9158

This annex lists the patent family members relating to the patent documents cited in the above-mentioned European search report.
The members are as contained in the European Patent Office EDP file on
The European Patent Office is in no way liable for these particulars which are merely given for the purpose of information.

23-12-2024

| Patent document cited in search report | Publication date | Patent family member(s) | Publication date |
|---|---|---|---|
| US 8586163 B2 | 19-11-2013 | AT E455150 T1 | 15-01-2010 |
| | | AU 2008317730 A1 | 07-05-2009 |
| | | CN 101842437 A | 22-09-2010 |
| | | EP 2055739 A1 | 06-05-2009 |
| | | ES 2339395 T3 | 19-05-2010 |
| | | RU 2010122341 A | 10-12-2011 |
| | | US 2010255236 A1 | 07-10-2010 |
| | | WO 2009056515 A1 | 07-05-2009 |
| US 2024158623 A1 | 16-05-2024 | BR 112023019172 A2 | 06-02-2024 |
| | | CN 117043256 A | 10-11-2023 |
| | | EP 4314153 A1 | 07-02-2024 |
| | | KR 20230158604 A | 20-11-2023 |
| | | US 2024158623 A1 | 16-05-2024 |
| | | WO 2022200396 A1 | 29-09-2022 |
| WO 2017076772 A1 | 11-05-2017 | CN 108350213 A | 31-07-2018 |
| | | WO 2017076772 A1 | 11-05-2017 |
| EP 2562215 B1 | 30-03-2016 | CN 103930481 A | 16-07-2014 |
| | | EP 2562215 A1 | 27-02-2013 |
| | | PL 2562215 T3 | 30-09-2016 |
| | | RU 2560723 C1 | 20-08-2015 |
| | | WO 2013029699 A1 | 07-03-2013 |
| US 2011315264 A1 | 29-12-2011 | AT E495204 T1 | 15-01-2011 |
| | | CN 102216348 A | 12-10-2011 |
| | | EP 2186834 A1 | 19-05-2010 |
| | | ES 2359761 T3 | 26-05-2011 |
| | | KR 20110073585 A | 29-06-2011 |
| | | PL 2186834 T3 | 30-06-2011 |
| | | US 2011315264 A1 | 29-12-2011 |
| | | WO 2010057840 A1 | 27-05-2010 |
| US 2019225723 A1 | 25-07-2019 | CN 109790230 A | 21-05-2019 |
| | | EP 3526261 A1 | 21-08-2019 |
| | | KR 20190057355 A | 28-05-2019 |
| | | RU 2721727 C1 | 21-05-2020 |
| | | US 2019225723 A1 | 25-07-2019 |
| | | WO 2018069263 A1 | 19-04-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0177961 A2
- WO 2008074494 A1
- WO 2013007650 A


### Non-patent literature cited in the description


- **XIAO W. et al.** *J. Appl. Polym. Sci.*, 2009, vol. 111, 1076-1085
- **BUSICO, V.** ; **CIPULLO, R.** *Prog. Polym. Sci.*, 2001, vol. 26, 443
- **BUSICO, V** ; **CIPULLO, R** ; **MONACO, G.** ; **VACATELLO, M.** ; **SEGRE, A.L.** *Macromolecules*, 1997, vol. 30
- **ZHOU, Z.** ; **KUEMMERLE, R.** ; **QIU, X.** ; **REDWINE, D.** ; **CONG, R.** ; **TAHA, A.** ; **BAUGH, D.** ; **WINNIFORD, B.** *J. Mag. Reson.*, 2007, vol. 187, 225
- **BUSICO, V** ; **CARBONNIERE, P.** ; **CIPULLO, R.** ; **PELLECCHIA, R.** ; **SEVEM, J.** ; **TALARICO, G.** *Macromol. Rapid Commun.*, 2007, vol. 28, 11289
- **RESCONI, L** ; **CAVALLO, L.** ; **FAIT, A.** ; **PIEMONTESI, F.** *Chem. Rev.*, 2000, vol. 100, 1253
- **WANG, W-J.** ; **ZHU, S**. *Macromolecules*, 2000, vol. 33, 1157
- **CHENG, H. N.** *Macromolecules*, 1984, vol. 17, 1950
- **V., CIPULLO** ; **R., PROG**. *Polym. Sci.*, 2001, vol. 26, 443
- **BUSICO, V.** ; **CIPULLO, R.** ; **MONACO, G.** ; **VACATELLO, M** ; **SEGRE, A.L**. *Macromolecules*, 1997, vol. 30, 6251
- **RESCONI, L.** ; **CAVALLO, L.** ; **FAIT, A** ; **PIEMONTESI, F.** *Chem. Rev.*, 2000, vol. 100, 1253
- **WANG, W-J.** ; **ZHU, S.** *Macromolecules*, 2000, vol. 33, 1157
- **KLIMKE, K.** ; **PARKINSON, M.** ; **PIEL, C.** ; **KAMINSKY, W** ; **SPIESS, H.W.** ; **WILHELM, M.** *Macromol. Chem. Phys.*, 2006, vol. 207, 382
- **PARKINSON, M.** ; **KLIMKE, K.** ; **SPIESS, H.W.** ; **WILHELM, M.** *Macromol. Chem. Phys*, 2007, vol. 208, 2128
- **POLLARD, M.** ; **KLIMKE, K.** ; **GRAF, R.** ; **SPIESS, H.W.** ; **WILHELM, M.** ; **SPERBER, O.** ; **PIEL, C.** ; **KAMINSKY, W.** *Macromolecules*, 2004, vol. 37, 813
- **FILIP, X.** ; **TRIPON, C.** ; **FILIP, C**. *J. Mag. Resn.*, 2005, vol. 176, 239
- **GRIFFIN, J.M** ; **TRIPON, C.** ; **SAMOSON, A.** ; **FILIP, C.** ; **BROWN, S.P**. *Mag. Res. in Chem.*, 2007, vol. 45 (S1), S198
- **CASTIGNOLLES, P.** ; **GRAF, R** ; **PARKINSON, M** ; **WILHELM, M** ; **GABORIEAU, M.** *Polymer*, 2009, vol. 50, 2373
- **RESCONI, L.** ; **CAVALLO, L.** ; **FAIT, A.** ; **PIEMONTESI, F.** *Chem. Rev.*, 2000, vol. 100, 1253
- **PAE KD**. *J. Polym. Sci.*, 1968, vol. 6, 657